(19) Europäisches Patentamt
European Patent Office
Office européen des brevets

(11) Publication number: **0 638 238 A1**

(12) **EUROPEAN PATENT APPLICATION**

(21) Application number: **94102060.4**

(22) Date of filing: **10.02.94**

(51) Int. Cl.[6]: **A01N 47/36**, //(A01N47/36, 59:02,57:16,55:00,47:34,47:18, 43:84,43:653,43:60,43:54,43:50, 43:40,43:38,37:50)

(30) Priority: **11.08.93 JP 217904/93**

(43) Date of publication of application: **15.02.95 Bulletin 95/07**

(84) Designated Contracting States: **DE ES FR GB IT NL PT**

(71) Applicant: **HODOGAYA CHEMICAL CO., LTD.**
**4-2, Toranomon 1-chome**
**Minato-ku**
**Tokyo (JP)**

(72) Inventor: **Murakami, Rie, c/o Hodogaya Chemical Co., Ltd.**
**Tsukuba Laboratory,**
**No. 45, Miyukigaoka**
**Tsukuba-shi,**
**Ibaraki (JP)**
Inventor: **Tanaka, Kenichi, c/o Hodogaya Chemical Co., Ltd.**
**Tsukuba Laboratory,**
**No. 45, Miyukigaoka**
**Tsukuba-shi,**
**Ibaraki (JP)**

(74) Representative: **Hansen, Bernd, Dr. Dipl.-Chem. et al**
**Hoffmann, Eitle & Partner,**
**Patentanwälte,**
**Arabellastrasse 4**
**D-81925 München (DE)**

(54) **Agricultural and horticultural fungicidal composition.**

(57) An agricultural and horticultural fungicidal composition comprising a benzothiazole derivative represented by formula (I):

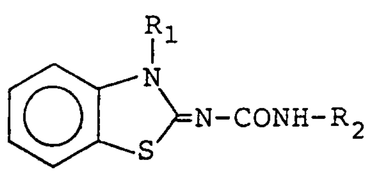

(I)

wherein $R_1$ represents a lower alkyl group, an alkenyl group, an alkynyl group, a cycloalkyl group, an alkoxyalkyl group, a benzyl group, an alkyl group containing a carbonyl group or an alkoxyalkyl group containing a carbonyl group; and $R_2$ represents a lower alkyl group, an alkoxy group or an alkyl group having from 1 to 3 carbon atoms and containing from 1 to 6 fluorine atoms, and a compound having a fungicidal activity is disclosed. The composition exhibits a markedly improved effect as compared to the effects of the individual use of the ingredient and is useful as the agricultural and horticultural fungicidal composition as it exhibits preventive and curing effects on plant diseases.

EP 0 638 238 A1

## FIELD OF THE INVENTION

This invention relates to an agricultural or horticultural fungicidal composition containing a benzothiazole derivative and a conventional fungicidal compound.

## BACKGROUND OF THE INVENTION

Today application of pesticides in agriculture is inevitable for controlling plant diseases to maintain high productivity. In the present situation with the great problem of environmental pollution confronting us, agricultural and horticultural fungicides have been demanded to be safe and effective at a dose level as low as possible.

Benzothiazole derivatives are compound having remarkably high controlling effects on powdery mildew of grain, fruit and vegetables as disclosed in JP-A-2-202881 (the term "JP-A" as used herein means un "unexamined Japanese Patent Application) (corresponding to EP-A-0 407 621) and EP-A-0 568 096.

However, continuous application of the same fungicide or fungicides having the same mode of action causes appearance of resistant microorganisms. It follows that the efficacy of the conventional fungicide is reduced, giving rise to an increase of diseases or necessity of applying large quantities of the fungicides. To solve these problems, there has been a demand to further increase the fungicidal activity and to minimize the dose level of application.

## SUMMARY OF THE INVENTION

In order to solve the above problem, the present inventors have extensively investigated plant disease controlling effects of a composition comprising the above-mentioned benzothiazole derivative and a conventional fungicidal compound and, as a result, ascertained that a greatly improved effect over that obtained from their individual use can be produced, thereby making it possible to decrease the effective dose level. The inventors have made a further study on combinations of a number of compounds aiming at practical use. As a result, the combined use was found not only to exhibit sufficient effects at a reduced level but also to bring about improvements in preventive effect and curing effect. The present invention has been completed based on these findings.

The present invention provides an agricultural and horticultural fungicidal composition comprising a benzothiazole derivative represented by formula (I):

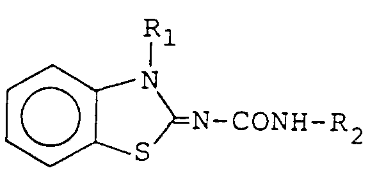

(I)

wherein $R_1$ represents a lower alkyl group, an alkenyl group, an alkynyl group, a cycloalkyl group, an alkoxyalkyl group, a benzyl group, an alkyl group containing a carbonyl group or an alkoxyalkyl group containing a carbonyl group; and $R_2$ represents a lower alkyl group, an alkoxy group or an alkyl group having from 1 to 3 carbon atoms and containing from 1 to 6 fluorine atoms, (hereinafter referred to as compound (I)) and a compound having a fungicidal activity (hereinafter referred to as compound (II)) as active ingredients.

In preferred embodiments of the invention, the radicals above, defining $R_1$ and $R_2$ independently of each other, have the following meanings: the lower alkyl group is preferably $C_1$ -$C_6$,and most preferably $C_1$-$C_4$ the alkenyl group is preferably $C_2$ -$C_{10}$, most preferably $C_2$-$C_5$, the alkynyl group is preferably $C_2$ -$C_{10}$, most preferably $C_2$-$C_5$ the cycloalkyl group is preferably $C_3$-$C_7$, most preferably $C_3$ -$C_6$, the alkoxyalkyl group is preferably $C_2$-$C_{10}$, most preferably $C_2$-$C_5$, the alkyl group containing a carbonyl group is preferably $C_2$ -$C_{10}$, most preferably $C_2$-$C_6$, the alkoxyalkyl group containing a carbonyl group is preferably $C_3$-$C_{10}$, most preferably $C_3$-$C_7$ and the alkoxy group is preferably $C_1$ - $C_{10}$, most preferably $C_1$-$C_7$.

## DETAILED DESCRIPTION OF THE INVENTION

In a preferred embodiment of the present invention, compound (II) is selected from azole compounds, pyrimidine compounds, piperazine compounds, piperidine compounds, pyridine compounds, morpholine

compounds, organophosphorus compounds, quinoxaline compounds, benzimidazole compounds, acrylic acid compounds, and sulfur.

Specific examples of the benzothiazole derivatives as compound (I) are shown in Table 1 below. They are synthesized according to the process described in Japanese Patent Application No. Hei-5-123224.

TABLE 1

| Compound No. | $R_1$ | $R_2$ |
|---|---|---|
| A | $-CH_2CH=CH_2$ | $-CH_3$ |
| B | $-CH_2CH=CH_2$ | $-CH_2CH_3$ |
| C | $-CH_2CH=CH_2$ | $-CH_2CH_2CH_3$ |
| D | $-CH_2CH=CH_2$ | $-CH(CH_3)_2$ |
| E | $-CH_2CH=CH_2$ | $-OCH_3$ |
| F | $-CH_2CH=CH_2$ | $-OCH_2CH_3$ |
| G | $-CH_2CH=CH_2$ | $-OCH(CH_3)_2$ |
| H | $-CH_2CH=CH_2$ | $-OCH_2C_6H_5$ |
| I | $-CH_2CH_3$ | $-OCH_3$ |
| J | $-CH_2CH_2CH_3$ | $-OCH_3$ |
| K | $-CH_2C(CH_3)=CH_2$ | $-OCH_3$ |
| L | $-CH_2OCH_3$ | $-OCH_3$ |
| M | $-CH_2C\equiv CH$ | $-OCH_3$ |
| N | $-CH_2CH=CH_2$ | $-CH_2CF_3$ |
| O | $-CH_2C\equiv CH$ | $-CH_2CF_3$ |
| P | $-CH_2CH=CH_2$ | $-CH_2CH_2F$ |
| Q | $-CH_2CH(CH_3)_2$ | $-CH_2CF_3$ |

Specific examples of compound (II) which can be preferably used in the present invention are shown below. The compound No., general name and chemical name thereof are shown below in this order.

1. Azole Compounds:

(1) Hexaconazole: (RS)-2-(2,4-dichlorophenyl)-1-(1H-1,2,4-triazol-1-yl)hexan-2-ol
(2) Microbutanyl: 2-(4-chlorophenyl)-2-(1H-1,2,4-triazol-1-ylmethyl)hexanenitrile
(3) Ciproconazole: 2-(4-chlorophenyl)-3-cyclopropyl-1-(1H-1,2,4-triazole)-1-ethanol
(4) Tebuconazole: α-t-butyl-α-(p-chlorophenylethyl)-1H-1,2,4-triazole-1-ethanol
(5) Diniconazole: (E)-(RS)-1-(2,4-dichlorophenyl)-4,4-dimethyl-2-(1H-1,2,4-triazol-1-yl)pent-1-en-3-ol
(6) Flutriafol: (RS)-2,4'-difluoro-α-(1H-1,2,4-triazol-1-ylmethyl)benzhydryl alcohol
(7) Penconazole: 1-[2-(2,4-dichlorophenyl)pentyl]-1H-1,2,4-triazole
(8) Flusilazole: bis(4-fluorophenyl)(methyl)(1H-1,2,4-triazol-1-ylmethyl)silane
(9) Tetraconazole: 1-[2-(2,4-dichlorophenyl)-3-(1,1,2,2-tetrafluoroethoxy)propyl]-1H-1,2,4-triazole
(10) Propiconazole: 1-[2-(2,4-dichlorophenyl)-4-propyl-1,3-dioxolan-2-ylmethyl]-1H-1,2,4-triazole
(11) Triadimefon: 1-(4-chlorophenoxy)-3,3-dimethyl-1-(1H-1,2,4-triazol-1-yl)-2-butanone
(12) Triadimenol: 1-(4-chlorophenoxy)-3,3-dimethyl-1-(1H-1,2,4-triazol-1-yl)-2-butanol
(13) Bitertanol: 1-(biphenyl-4-yloxy)-3,3-dimethyl-1-(1H-1,2,4-triazol-1-yl)butan-2-ol
(14) Methoconazole: (1RS,5RS,5SR)-5-(4-chlorobenzyl)-2,2-dimethyl-1-(1H-1,2,4-triazol-1-ylmethyl)-cyclopentanol
(15) Prochloraz: N-propyl-N-[2-(2,4,6-trichlorophenoxy)ethyl]imidazole-1-carboxamide
(16) Triflumizole: 1-[N-(4-chloro-2-trifluoromethylphenyl)-2-propoxyacetimidoyl]imidazole
(17) Epoxyconazole: (2RS,3SR)-1-[3-(2-chlorophenyl)-2-(4-fluorophenyl)oxylan-2-ylmethyl]-1H-1,2,4-triazole

(18) Fluconazole•cis: 1-{[2-(2,4-dichlorophenyl)tetrahydro-5-(2,2,2-trifluoroethoxy)-2-furanyl]methyl}-1H-1,2,4-triazole

(19) Fluquiniconazole: 3-(2,4-dichlorophenyl)-6-fluoro-2-(1H-1,2,4-triazol-1-yl)quinazolin-4(3H)-3-one

(20) Febuconazole: 4-(4-chlorophenyl)-2-phenyl-2-(1H-1,2,4-triazol-1-ylmethyl)butyronitrile

(21) Bromoconazole: 1-[(2RS,4RS;2RS,4SR)-4-bromo-2-(2,4-dichlorophenyl)tetrahydrofurfuryl]-1H-1,2,4-triazole

(22) Difenoconazole: 1-{2-[4-(4-chlorophenoxy)-2-chlorophenyl]-4-methyl-1,3-dioxolan-2-ylmethyl}-1H-1,2,4-triazole

2. Pyrimidine, Piperazine, Piperidine or Pyridine Compounds:

(23) Fenarimol: (±)2,4'-dichloro-α-(pyrimidin-5-yl)benzhydryl alcohol

(24) Nuarimol: 2-chloro-4'-fluoro-α-(pyrimidin-5-yl)benzhydryl alcohol

(25) Triforine: N,N'-piperazine-1,4-diyl bis-[(trichloromethyl)methylene]diformamide

(26) Fenpropidin: (RS)-1-[3-(4-t-butylphenyl)-2-methylpropyl]piperidine

(27) Pyriphenox: 2',4'-dichloro-2-(3-pyridyl)acetophenone-O-methyloxime

(28) Dimethirimol: 5-butyl-2-dimethylamino-6-methylpyrimidin-4-ol

(29) Ethirimol: 5-butyl-2-ethylamino-6-methylpyrimidin-4-ol

3. Morpholine Compounds:

(30) Tridemorph: 2,6-dimethyl-4-tridecylmorpholine

(31) Fenpropimorph: (±)cis-4-[3-(4-t-butylphenyl)-2-methylpropyl]-2,6-dimethylmorpholine

4. Organophosphorus Compounds:

(32) Pyrazophos: O-6-ethoxycarbonyl-5-methylpyrazolo[1,5-a]pyrimidin-2-yl-O,O-diethylphosphorothioate

5. Quinoxaline Compounds:

(33) Quinomethionate: 6-methyl-1,3-dithiolo[4,5-b]quinoxalin-2-one

6. Benzimidazole Compounds:

(34) Benomyl: methyl 1-(butylcarbamoyl)benzimidazol-2-ylcarbamate

(35) Thiophanate-methyl: dimethyl 4,4'-(o-phenylene)bis(3-thioallophanate)

(36) Carbendazim: methyl benzimidazol-2-ylcarbamate

7. Acrylic Acid Compounds:

(37) BAS 490F: methyl (E)methoxyimino[α-(o-tolyloxy)-o-tolyl]acetate

(38) ICIA 5504: methyl (E)-2-{2-[6-(2-cyanophenoxy)pyrimidin-4-yloxy]phenyl-3-methoxyacrylate

8. Others:

(39) Sulfur

In the production of the fungicidal composition of the present invention, compound (I) and compound (II) are mixed usually at a weight ratio of from 1:100 to 100:1, and preferably from 1:50 to 50:1.

In applying the fungicidal composition of the present invention as a fungicide, compounds (I) and (II) can be mixed with various carriers and formulated into various forms, such as wettable powders, emulsions, dusts, granules, and suspensions, in a usual manner.

Of the carriers, liquids include conventional organic solvents, and solids include conventional clay minerals and pumice powder. Surfactants may be used for improving emulsifiability, dispersibility, spreadability, and the like as hereinafter described in detail.

If desired, the fungicidal composition of the present invention may be used as admixture with or in combination with other agricultural chemicals, such as fertilizers, insecticides and other fungicides.

The fungicidal composition of the present invention should be applied in such an amount sufficient for obtaining desired effects. In general, a suitable amount of the composition to be applied ranges from 1 to 2,000 g/ha, and preferably from 10 to 1,000 g/ha, which is applied in the form of a wettable powder, an emulsion, a dust, a granule or a flowable containing compounds (I) and (II) as the active ingredients in a total concentration of from 0.1 to 50 % by weight.

Emulsion can be prepared by dissolving the active ingredients in an agriculturally acceptable organic solvent and adding a solvent-soluble emulsifying agent. Suitable solvents include xylene, o-chlorotoluene, cyclohexanone, isophorone, dimethylformamide, dimethyl sulfoxide, and a mixture thereof. An aromatic hydrocarbon or a mixture of an aromatic hydrocarbon, a ketone, and a polar solvent is particularly preferred. A surfactants as an emulsifying agent is added in an amount of from 1 to 20 % by weight based on the emulsion. Any of anionic, cationic and non-ionic surfactants may be employed. A suitable total concentration of the active ingredients in the emulsion is from 0.5 to 50 % by weight, and preferably from 5 to 30 % by weight.

Examples of suitable anionic surfactants include alkylsulfate esters, alkyl diphenyl ether disulfonates, naphtylmethanesulfonates, lignin sulfonates, alkylsulfosuccinates, alkylbenzenesulfonates, and alkylphosphates. Examples of suitable cationic surfactants include alkylamine salts and quaternary ammonium salts. Examples of suitable nonionic surfactants include polyoxyethylene alkyl ethers, polyoxyethylene alkylaryl ethers, sorbitan fatty acid esters, polyoxyethylene sorbitan fatty acid esters, polyoxyethylene sorbitol fatty acid esters, glycerin fatty acid esters, and polyoxyethylene fatty acid esters.

Wettable powders can be prepared by adding the active ingredients to a finely pulverized inert solid carrier and a surfactant. Wettable powders generally contain from 2 to 50 % by weight of the active ingredients and from 1 to 20 % by weight of the surfactants. Suitable inert solid carriers include naturally-occurring clay, silicates, silica, and alkaline earth metal carbonates. Typical examples of such solid carriers are kaolin, zirkelite, talc, diatomaceous earth, magnesium carbonate, calcium carbonate, and dolomite. Commonly employed anionic or nonionic surfactants (specific examples thereof have been described above) or mixtures thereof can be used as an emulsifying agent, a spreading agent or a dispersing agent.

Dusts can be prepared by adding the active ingredients to a commonly employed inert carrier, such as talc, fine powders of clay, pyrophyllite, diatomaceous earth or magnesium carbonate, in a concentration ranging from 0.1 to 20 % by weight, and preferably from 0.5 to 5 % by weight.

Granules can be prepared by mixing the active ingredients with a finely pulverized inert carrier, such as bentonite, diatomaceous earth, kaolin clay or talc, kneaded with water, and granulated by means of a granulating apparatus. Alternatively, granules may be prepared by adhering a solution of the active ingredients and a spreading agent onto a granular carrier having previously been granulated to a particle size of from 15 mesh to 30 mesh or a granular mineral, such as naturally-occurring pumice powder, acid clay or zeolite, having its particle size previously been regulated by grinding. Granules suitably contain the active ingredients in a total concentration ranging from 0.2 to 20 % by weight, and preferably from 1 to 10 % by weight.

Flowables can be prepared by finely pulverizing the active ingredients and mixing the resulting powder with a surfactant and water. Any of the above-mentioned anionic, cationic or nonionic surfactants can be used either individually or in combination thereof in an amount of from 1 to 20 % by weight. The total content of the active ingredients in flowables ranges from 1 to 50 % by weight, and preferably from 2 to 20 % by weight.

The present invention will now be illustrated in greater detail by way of Formulation Examples and Test Examples, but the present invention should not be construed as being limited thereto.

FORMULATION EXAMPLE 1

(Emulsion)

| | |
|---|---|
| Compound A | 20 parts |
| Compound (1) | 1 part |
| o-Chlorotoluene | 37 parts |
| Cyclohexanone | 36 parts |
| Sorpole 900B | 6 parts |
| (Sorpole 900B: trade name of a product comprising a polyoxyethylenealkylphenol polymer, a polyoxyethylene alkylaryl ether, a polyoxyethylene sorbitan fatty acid ester and an anionic surfactant, manufactured by Toho Chemical Industry Co., Ltd.). | |

The above components were uniformly mixed to dissolve to prepare an emulsion.

FORMULATION EXAMPLE 2

(Emulsion)

| | |
|---|---|
| Compound B | 10 parts |
| Compound (2) | 2 parts |
| Isophorone | 30 parts |
| o-Chlorotoluene | 28 parts |
| Xylene | 26 parts |
| Sorpole 900A | 4 parts |
| (Sorpole 900A: trade name of a product comprising a polyoxyethylenealkylphenol polymer, a polyoxyethylene alkylaryl ether, a polyoxyethylene sorbitan fatty acid ester and an anionic surfactant, manufactured by Toho Chemical Industry Co., Ltd.) | |

The above components were uniformly mixed to dissolve to prepare an emulsion.

FORMULATION EXAMPLE 3

(Emulsion)

| | |
|---|---|
| Compound E | 10 parts |
| Compound (26) | 5 parts |
| o-Chlorotoluene | 25 parts |
| Xylene | 25 parts |
| Cyclohexanone | 30 parts |
| Sorpole 2934 | 5 parts |
| (Sorpole 2934: trade name of a product comprising a polyoxyethylene styryl phenyl ether and a polyoxyethylene castor oil, manufactured by Toho Chemical Industry Co., Ltd.) | |

The above components were uniformly mixed to dissolve to prepare an emulsion.

FORMULATION EXAMPLE 4

(Emulsion)

| | |
|---|---|
| Compound N | 5 parts |
| Compound (30) | 10 parts |
| Xylene | 45 parts |
| Cyclohexanone | 35 parts |
| Sorpole 3900 | 5 parts |
| (Sorpole 3900: trade name of a product comprising a polyoxyethylene styryl phenyl ether, a polyoxyethylene styryl phenyl ether polymer, and an alkyl aryl sulfonate, manufactured by Toho Chemical Industry Co., Ltd.) | |

The above components were uniformly mixed to dissolve to prepare an emulsion.

FORMULATION EXAMPLE 5

(Wettable Powder)

| | |
|---|---|
| Compound C | 20 parts |
| Compound (9) | 1 part |
| Kaoline clay | 73 parts |
| Sorpole 5050 | 3 parts |
| Sorpole 5039 | 3 parts |
| (Sorpole 5050: trade name of a product comprising a dialkyl ester sulfonate; Sorpole 5039: trade name of a product comprising an ammonium polyoxyethylene alkylaryl ether sulfate, both manufactured by Toho Chemical Industry Co., Ltd.) | |

The above components were mixed and ground to prepare a wettable powder.

FORMULATION EXAMPLE 6

(Wettable Powder)

| | |
|---|---|
| Compound D | 25 parts |
| Compound (10) | 5 parts |
| SA clay | 63 parts |
| Sorpole 5082 | 7 parts |
| (Sorpole 5082: trade name of a product comprising a mixture of a sulfate and a sulfonate, manufactured by Toho Chemical Industry Co., Ltd.) | |

The above components were mixed and ground to prepare a wettable powder.

FORMULATION EXAMPLE 7

(Wettable Powder)

| | |
|---|---|
| Compound F | 20 parts |
| Compound (26) | 10 parts |
| Fubasami clay | 62 parts |
| Sorpole 5096 | 4 parts |
| Sorpole 5115 | 4 parts |
| (Sorpole 5096: trade name of a product comprising a polyoxyethylene phenyl alkyl aryl ether sulfate; Sorpole 5115: trade name of a product comprising an alkenylsulfonate, both manufactured by Toho Chemical Industry Co., Ltd.) | |

The above components were mixed and ground to prepare a wettable powder.

FORMULATION EXAMPLE 8

(Wettable Powder)

| | |
|---|---|
| Compound N<br>Compound (31)<br>SA clay<br>Sorpole 9047K | 10 parts<br>20 parts<br>63 parts<br>7 parts |
| (Sorpole 9047K: trade name of a product comprising lignin sulfonate, manufactured by Toho Chemical Industry Co., Ltd.) | |

The above components were mixed and ground to prepare a wettable powder.

FORMULATION EXAMPLE 9

(Wettable Powder)

| | |
|---|---|
| Compound G | 2 parts |
| Compound (39) | 20 parts |
| Kaolin clay | 73 parts |
| Sorpole 5039 | 5 parts |

The above components were mixed and ground to prepare a wettable powder.

FORMULATION EXAMPLE 10

(Wettable Powder)

| | |
|---|---|
| Compound I | 1 part |
| Compound (39) | 40 parts |
| Kaolin clay | 49 parts |
| Sorpole 5039 | 10 parts |

The above components were mixed and ground to prepare a wettable powder.

FORMULATION EXAMPLE 11

(Dust)

| | |
|---|---|
| Compound J | 20 parts |
| Compound (23) | 1 part |
| Fubasami clay (yielded at Tochigi, Japan) | 79 parts |

The above components were mixed and ground to prepare a dust.

FORMULATION EXAMPLE 12

(Granule)

| | |
|---|---|
| Compound K | 5 parts |
| Compound (1) | 1 part |
| Bentonite | 30 parts |
| Talc | 59 parts |
| Sodium lignin sulfonate | 5 parts |

The above components were uniformly mixed and ground. Water was added thereto, and the mixture was kneaded, granulated, and dried to prepare a granule.

FORMULATION EXAMPLE 13

(Flowable)

| | |
|---|---|
| Compound B | 20 parts |
| Compound (14) | 1 part |
| Ethylene glycol | 5 parts |
| Sorpole 5073 | 2 parts |
| Water | 67 parts |
| Sorpole 5060 | 5 parts |
| (Sorpole 5060: trade name of a mixture of a sodium alkylaryl sulfonate and phosphoric acid, manufactured by Toho Chemical Industry Co., Ltd.) | |

The above components were uniformly mixed and ground to obtain a flowable.

FORMULATION EXAMPLE 14

(Flowable)

| | |
|---|---|
| Compound C | 25 parts |
| Compound (15) | 5 parts |
| Ethylene glycol | 5 parts |
| Sorpole 5115 | 5 parts |
| Sorpole 5160 | 5 parts |
| Water | 55 parts |
| (Sorpole 5160: trade name of a product comprising an alkenyl sulfonate and phosphoric acid, manufactured by Toho Chemical Industry Co., Ltd.) | |

The above components were uniformly mixed and ground to obtain a flowable.

FORMULATION EXAMPLE 15

(Flowable)

| | |
|---|---|
| Compound E | 10 parts |
| Compound (30) | 5 parts |
| Ethylene glycol | 5 parts |
| Xanthane gum | 0.5 part |
| Sorpole 8070 | 5 parts |
| Sorpole 7243 | 1 part |
| Water | 73.5 parts |
| (Sorpole 8070: trade name of a product comprising an alkyl sulfate, manufactured by Toho Chemical Industry Co., Ltd.) | |

The above components were uniformly mixed and ground to obtain a flowable.

FORMULATION EXAMPLE 16

(Flowable)

| | |
|---|---|
| Compound O | 5 parts |
| Compound (31) | 10 parts |
| Ethylene glycol | 5 parts |
| Xanthane gum | 0.2 part |
| Sorpole 7062S | 6 parts |
| Water | 73.8 parts |
| (Sorpole 7062S: trade name of a product comprising a mixture of nonionic and anionic surfactants, manufactured by Toho Chemical Industry Co., Ltd.) | |

The above components were uniformly mixed and ground to obtain a flowable.

TEST EXAMPLE 1

(Preventive Effect Against Wheat Powdery Mildew)

Wheat (species: *Norin No. 61*) was cultivated in a plastic pot having a diameter of 7 cm. When the plant reached the two-leaf stage, 10 mℓ of a test composition adjusted to a prescribed concentration was sprayed over the plant using a spray gun. Regarding each test composition, four lots each having 13 plants were employed, and two lots of them were treated with the test composition (test lot) and the other two lots of them were not treated with the test composition (control lot). After 1 day from the treatment, conidia of *Erysiphe graminis* which causes wheat powdery mildew were inoculated by spraying. The plants were cultivated in a dark room at 20°C for 24 hours and then at 20°C for 6 days with 12 hour-photoperiod. On the 7th day after the inoculation, the lesions on the first and second leaves was investigated, and the prevention value (%) was calculated in accordance with the following equation:

$$\text{Prevention Value} = \frac{\text{Rate of lesion spot of control lot} - \text{Rate of lesion spot of test lot}}{\text{Rate of lesion spot of control lot}} \times 100$$

The results obtained are shown in Tables 2 to 29.

TABLE 2

| Test Compound No. | Test Concentration (ppm) | Prevention Value (%) | Test Compound No. | Test Concentration (ppm) | Prevention Value (%) |
|---|---|---|---|---|---|
| A | 10 | 35 | 8 | 1 | 50 |
| B | 10 | 55 | 10 | 1 | 55 |
| C | 10 | 40 | 11 | 1 | 40 |
| D | 10 | 45 | 12 | 1 | 50 |
| E | 10 | 50 | 14 | 1 | 45 |
| F | 10 | 35 | 15 | 1 | 40 |
| G | 10 | 50 | 17 | 1 | 50 |
| H | 10 | 40 | 18 | 1 | 35 |
| I | 10 | 40 | 19 | 1 | 40 |
| J | 10 | 50 | 20 | 1 | 40 |
| K | 10 | 50 | 21 | 1 | 50 |
| L | 10 | 35 | 22 | 1 | 55 |
| M | 10 | 45 | 23 | 1 | 45 |
| N | 10 | 40 | 26 | 10 | 50 |
| O | 10 | 40 | 27 | 1 | 40 |
| P | 10 | 35 | 30 | 10 | 50 |
| Q | 10 | 50 | 31 | 10 | 45 |
| 1 | 1 | 50 | 32 | 10 | 40 |
| 3 | 1 | 55 | 36 | 10 | 45 |
| 4 | 1 | 40 | 37 | 1 | 50 |
| 6 | 1 | 40 | 38 | 1 | 45 |
| 7 | 1 | 45 | 39 | 200 | 50 |

TABLE 3

| Test Compound No. | Test Concentration (ppm) | Prevention Value (%) | Test Compound No. | Test Concentration (ppm) | Prevention Value (%) |
|---|---|---|---|---|---|
| A + 1 | 10 + 0.5<br>5 + 1 | 100<br>100 | J + 1 | 10 + 0.5<br>5 + 1 | 100<br>100 |
| B + 1 | 10 + 0.5<br>5 + 1 | 100<br>100 | K + 1 | 10 + 0.5<br>5 + 1 | 100<br>100 |
| C + 1 | 10 + 0.5<br>5 + 1 | 100<br>100 | L + 1 | 10 + 0.5<br>5 + 1 | 100<br>100 |
| D + 1 | 10 + 0.5<br>5 + 1 | 100<br>100 | M + 1 | 10 + 0.5<br>5 + 1 | 100<br>100 |
| E + 1 | 10 + 0.5<br>5 + 1 | 100<br>100 | N + 1 | 10 + 0.5<br>5 + 1 | 100<br>100 |
| F + 1 | 10 + 0.5<br>5 + 1 | 100<br>100 | O + 1 | 10 + 0.5<br>5 + 1 | 100<br>100 |
| G + 1 | 10 + 0.5<br>5 + 1 | 100<br>100 | P + 1 | 10 + 0.5<br>5 + 1 | 100<br>100 |
| H + 1 | 10 + 0.5<br>5 + 1 | 100<br>100 | Q + 1 | 10 + 0.5<br>5 + 1 | 100<br>100 |
| I + 1 | 10 + 0.5<br>5 + 1 | 100<br>100 | | | |

TABLE 4

| Test Compound No. | Test Concentration (ppm) | Prevention Value (%) | Test Compound No. | Test Concentration (ppm) | Prevention Value (%) |
|---|---|---|---|---|---|
| A + 3 | 10 + 0.5<br>5 + 1 | 100<br>100 | J + 3 | 10 + 0.5<br>5 + 1 | 100<br>100 |
| B + 3 | 10 + 0.5<br>5 + 1 | 100<br>100 | K + 3 | 10 + 0.5<br>5 + 1 | 100<br>100 |
| C + 3 | 10 + 0.5<br>5 + 1 | 100<br>100 | L + 3 | 10 + 0.5<br>5 + 1 | 100<br>100 |
| D + 3 | 10 + 0.5<br>5 + 1 | 100<br>100 | M + 3 | 10 + 0.5<br>5 + 1 | 100<br>100 |
| E + 3 | 10 + 0.5<br>5 + 1 | 100<br>100 | N + 3 | 10 + 0.5<br>5 + 1 | 100<br>100 |
| F + 3 | 10 + 0.5<br>5 + 1 | 100<br>100 | O + 3 | 10 + 0.5<br>5 + 1 | 100<br>100 |
| G + 3 | 10 + 0.5<br>5 + 1 | 100<br>100 | P + 3 | 10 + 0.5<br>5 + 1 | 100<br>100 |
| H + 3 | 10 + 0.5<br>5 + 1 | 100<br>100 | Q + 3 | 10 + 0.5<br>5 + 1 | 100<br>100 |
| I + 3 | 10 + 0.5<br>5 + 1 | 100<br>100 | | | |

TABLE 5

| Test Compound No. | Test Concentration (ppm) | Prevention Value (%) | Test Compound No. | Test Concentration (ppm) | Prevention Value (%) |
|---|---|---|---|---|---|
| A + 4 | 10 + 0.5<br>5 + 1 | 100<br>100 | J + 4 | 10 + 0.5<br>5 + 1 | 100<br>100 |
| B + 4 | 10 + 0.5<br>5 + 1 | 100<br>100 | K + 4 | 10 + 0.5<br>5 + 1 | 100<br>100 |
| C + 4 | 10 + 0.5<br>5 + 1 | 100<br>100 | L + 4 | 10 + 0.5<br>5 + 1 | 100<br>100 |
| D + 4 | 10 + 0.5<br>5 + 1 | 100<br>100 | M + 4 | 10 + 0.5<br>5 + 1 | 100<br>100 |
| E + 4 | 10 + 0.5<br>5 + 1 | 100<br>100 | N + 4 | 10 + 0.5<br>5 + 1 | 100<br>100 |
| F + 4 | 10 + 0.5<br>5 + 1 | 100<br>100 | O + 4 | 10 + 0.5<br>5 + 1 | 100<br>100 |
| G + 4 | 10 + 0.5<br>5 + 1 | 100<br>100 | P + 4 | 10 + 0.5<br>5 + 1 | 100<br>100 |
| H + 4 | 10 + 0.5<br>5 + 1 | 100<br>100 | Q + 4 | 10 + 0.5<br>5 + 1 | 100<br>100 |
| I + 4 | 10 + 0.5<br>5 + 1 | 100<br>100 | | | |

TABLE 6

| Test Compound No. | Test Concentration (ppm) | Prevention Value (%) | Test Compound No. | Test Concentration (ppm) | Prevention Value (%) |
|---|---|---|---|---|---|
| A + 6 | 10 + 0.5<br>5 + 1 | 100<br>100 | J + 6 | 10 + 0.5<br>5 + 1 | 100<br>100 |
| B + 6 | 10 + 0.5<br>5 + 1 | 100<br>100 | K + 6 | 10 + 0.5<br>5 + 1 | 100<br>100 |
| C + 6 | 10 + 0.5<br>5 + 1 | 100<br>100 | L + 6 | 10 + 0.5<br>5 + 1 | 100<br>100 |
| D + 6 | 10 + 0.5<br>5 + 1 | 100<br>100 | M + 6 | 10 + 0.5<br>5 + 1 | 100<br>100 |
| E + 6 | 10 + 0.5<br>5 + 1 | 100<br>100 | N + 6 | 10 + 0.5<br>5 + 1 | 100<br>100 |
| F + 6 | 10 + 0.5<br>5 + 1 | 100<br>100 | O + 6 | 10 + 0.5<br>5 + 1 | 100<br>100 |
| G + 6 | 10 + 0.5<br>5 + 1 | 100<br>100 | P + 6 | 10 + 0.5<br>5 + 1 | 100<br>100 |
| H + 6 | 10 + 0.5<br>5 + 1 | 100<br>100 | Q + 6 | 10 + 0.5<br>5 + 1 | 100<br>100 |
| I + 6 | 10 + 0.5<br>5 + 1 | 100<br>100 | | | |

TABLE 7

| Test Compound No. | Test Concentration (ppm) | Prevention Value (%) | Test Compound No. | Test Concentration (ppm) | Prevention Value (%) |
|---|---|---|---|---|---|
| A + 7 | 10 + 0.5<br>5 + 1 | 100<br>100 | J + 7 | 10 + 0.5<br>5 + 1 | 100<br>100 |
| B + 7 | 10 + 0.5<br>5 + 1 | 100<br>100 | K + 7 | 10 + 0.5<br>5 + 1 | 100<br>100 |
| C + 7 | 10 + 0.5<br>5 + 1 | 100<br>100 | L + 7 | 10 + 0.5<br>5 + 1 | 100<br>100 |
| D + 7 | 10 + 0.5<br>5 + 1 | 100<br>100 | M + 7 | 10 + 0.5<br>5 + 1 | 100<br>100 |
| E + 7 | 10 + 0.5<br>5 + 1 | 100<br>100 | N + 7 | 10 + 0.5<br>5 + 1 | 100<br>100 |
| F + 7 | 10 + 0.5<br>5 + 1 | 100<br>100 | O + 7 | 10 + 0.5<br>5 + 1 | 100<br>100 |
| G + 7 | 10 + 0.5<br>5 + 1 | 100<br>100 | P + 7 | 10 + 0.5<br>5 + 1 | 100<br>100 |
| H + 7 | 10 + 0.5<br>5 + 1 | 100<br>100 | Q + 7 | 10 + 0.5<br>5 + 1 | 100<br>100 |
| I + 7 | 10 + 0.5<br>5 + 1 | 100<br>100 | | | |

TABLE 8

| Test Compound No. | Test Concentration (ppm) | Prevention Value (%) | Test Compound No. | Test Concentration (ppm) | Prevention Value (%) |
|---|---|---|---|---|---|
| A + 8 | 10 + 0.5<br>5 + 1 | 100<br>100 | J + 8 | 10 + 0.5<br>5 + 1 | 100<br>100 |
| B + 8 | 10 + 0.5<br>5 + 1 | 100<br>100 | K + 8 | 10 + 0.5<br>5 + 1 | 100<br>100 |
| C + 8 | 10 + 0.5<br>5 + 1 | 100<br>100 | L + 8 | 10 + 0.5<br>5 + 1 | 100<br>100 |
| D + 8 | 10 + 0.5<br>5 + 1 | 100<br>100 | M + 8 | 10 + 0.5<br>5 + 1 | 100<br>100 |
| E + 8 | 10 + 0.5<br>5 + 1 | 100<br>100 | N + 8 | 10 + 0.5<br>5 + 1 | 100<br>100 |
| F + 8 | 10 + 0.5<br>5 + 1 | 100<br>100 | O + 8 | 10 + 0.5<br>5 + 1 | 100<br>100 |
| G + 8 | 10 + 0.5<br>5 + 1 | 100<br>100 | P + 8 | 10 + 0.5<br>5 + 1 | 100<br>100 |
| H + 8 | 10 + 0.5<br>5 + 1 | 100<br>100 | Q + 8 | 10 + 0.5<br>5 + 1 | 100<br>100 |
| I + 8 | 10 + 0.5<br>5 + 1 | 100<br>100 | | | |

TABLE 9

| Test Compound No. | Test Concentration (ppm) | Prevention Value (%) | Test Compound No. | Test Concentration (ppm) | Prevention Value (%) |
|---|---|---|---|---|---|
| A + 10 | 10 + 0.5<br>5 + 1 | 100<br>100 | J + 10 | 10 + 0.5<br>5 + 1 | 100<br>100 |
| B + 10 | 10 + 0.5<br>5 + 1 | 100<br>100 | K + 10 | 10 + 0.5<br>5 + 1 | 100<br>100 |
| C + 10 | 10 + 0.5<br>5 + 1 | 100<br>100 | L + 10 | 10 + 0.5<br>5 + 1 | 100<br>100 |
| D + 10 | 10 + 0.5<br>5 + 1 | 100<br>100 | M + 10 | 10 + 0.5<br>5 + 1 | 100<br>100 |
| E + 10 | 10 + 0.5<br>5 + 1 | 100<br>100 | N + 10 | 10 + 0.5<br>5 + 1 | 100<br>100 |
| F + 10 | 10 + 0.5<br>5 + 1 | 100<br>100 | O + 10 | 10 + 0.5<br>5 + 1 | 100<br>100 |
| G + 10 | 10 + 0.5<br>5 + 1 | 100<br>100 | P + 10 | 10 + 0.5<br>5 + 1 | 100<br>100 |
| H + 10 | 10 + 0.5<br>5 + 1 | 100<br>100 | Q + 10 | 10 + 0.5<br>5 + 1 | 100<br>100 |
| I + 10 | 10 + 0.5<br>5 + 1 | 100<br>100 | | | |

TABLE 10

| Test Compound No. | Test Concentration (ppm) | Prevention Value (%) | Test Compound No. | Test Concentration (ppm) | Prevention Value (%) |
|---|---|---|---|---|---|
| A + 11 | 10 + 0.5<br>5 + 1 | 100<br>100 | J + 11 | 10 + 0.5<br>5 + 1 | 100<br>100 |
| B + 11 | 10 + 0.5<br>5 + 1 | 100<br>100 | K + 11 | 10 + 0.5<br>5 + 1 | 100<br>100 |
| C + 11 | 10 + 0.5<br>5 + 1 | 100<br>100 | L + 11 | 10 + 0.5<br>5 + 1 | 100<br>100 |
| D + 11 | 10 + 0.5<br>5 + 1 | 100<br>100 | M + 11 | 10 + 0.5<br>5 + 1 | 100<br>100 |
| E + 11 | 10 + 0.5<br>5 + 1 | 100<br>100 | N + 11 | 10 + 0.5<br>5 + 1 | 100<br>100 |
| F + 11 | 10 + 0.5<br>5 + 1 | 100<br>100 | O + 11 | 10 + 0.5<br>5 + 1 | 100<br>100 |
| G + 11 | 10 + 0.5<br>5 + 1 | 100<br>100 | P + 11 | 10 + 0.5<br>5 + 1 | 100<br>100 |
| H + 11 | 10 + 0.5<br>5 + 1 | 100<br>100 | Q + 11 | 10 + 0.5<br>5 + 1 | 100<br>100 |
| I + 11 | 10 + 0.5<br>5 + 1 | 100<br>100 | | | |

TABLE 11

| Test Compound No. | Test Concentration (ppm) | Prevention Value (%) | Test Compound No. | Test Concentration (ppm) | Prevention Value (%) |
|---|---|---|---|---|---|
| A + 12 | 10 + 0.5<br>5 + 1 | 100<br>100 | J + 12 | 10 + 0.5<br>5 + 1 | 100<br>100 |
| B + 12 | 10 + 0.5<br>5 + 1 | 100<br>100 | K + 12 | 10 + 0.5<br>5 + 1 | 100<br>100 |
| C + 12 | 10 + 0.5<br>5 + 1 | 100<br>100 | L + 12 | 10 + 0.5<br>5 + 1 | 100<br>100 |
| D + 12 | 10 + 0.5<br>5 + 1 | 100<br>100 | M + 12 | 10 + 0.5<br>5 + 1 | 100<br>100 |
| E + 12 | 10 + 0.5<br>5 + 1 | 100<br>100 | N + 12 | 10 + 0.5<br>5 + 1 | 100<br>100 |
| F + 12 | 10 + 0.5<br>5 + 1 | 100<br>100 | O + 12 | 10 + 0.5<br>5 + 1 | 100<br>100 |
| G + 12 | 10 + 0.5<br>5 + 1 | 100<br>100 | P + 12 | 10 + 0.5<br>5 + 1 | 100<br>100 |
| H + 12 | 10 + 0.5<br>5 + 1 | 100<br>100 | Q + 12 | 10 + 0.5<br>5 + 1 | 100<br>100 |
| I + 12 | 10 + 0.5<br>5 + 1 | 100<br>100 | | | |

TABLE 12

| Test Compound No. | Test Concentration (ppm) | Prevention Value (%) | Test Compound No. | Test Concentration (ppm) | Prevention Value (%) |
|---|---|---|---|---|---|
| A + 14 | 10 + 0.5<br>5 + 1 | 100<br>100 | J + 14 | 10 + 0.5<br>5 + 1 | 100<br>100 |
| B + 14 | 10 + 0.5<br>5 + 1 | 100<br>100 | K + 14 | 10 + 0.5<br>5 + 1 | 100<br>100 |
| C + 14 | 10 + 0.5<br>5 + 1 | 100<br>100 | L + 14 | 10 + 0.5<br>5 + 1 | 100<br>100 |
| D + 14 | 10 + 0.5<br>5 + 1 | 100<br>100 | M + 14 | 10 + 0.5<br>5 + 1 | 100<br>100 |
| E + 14 | 10 + 0.5<br>5 + 1 | 100<br>100 | N + 14 | 10 + 0.5<br>5 + 1 | 100<br>100 |
| F + 14 | 10 + 0.5<br>5 + 1 | 100<br>100 | O + 14 | 10 + 0.5<br>5 + 1 | 100<br>100 |
| G + 14 | 10 + 0.5<br>5 + 1 | 100<br>100 | P + 14 | 10 + 0.5<br>5 + 1 | 100<br>100 |
| H + 14 | 10 + 0.5<br>5 + 1 | 100<br>100 | Q + 14 | 10 + 0.5<br>5 + 1 | 100<br>100 |
| I + 14 | 10 + 0.5<br>5 + 1 | 100<br>100 | | | |

TABLE 13

| Test Compound No. | Test Concentration (ppm) | Prevention Value (%) | Test Compound No. | Test Concentration (ppm) | Prevention Value (%) |
|---|---|---|---|---|---|
| A + 15 | 10 + 0.5<br>5 + 1 | 100<br>100 | J + 15 | 10 + 0.5<br>5 + 1 | 100<br>100 |
| B + 15 | 10 + 0.5<br>5 + 1 | 100<br>100 | K + 15 | 10 + 0.5<br>5 + 1 | 100<br>100 |
| C + 15 | 10 + 0.5<br>5 + 1 | 100<br>100 | L + 15 | 10 + 0.5<br>5 + 1 | 100<br>100 |
| D + 15 | 10 + 0.5<br>5 + 1 | 100<br>100 | M + 15 | 10 + 0.5<br>5 + 1 | 100<br>100 |
| E + 15 | 10 + 0.5<br>5 + 1 | 100<br>100 | N + 15 | 10 + 0.5<br>5 + 1 | 100<br>100 |
| F + 15 | 10 + 0.5<br>5 + 1 | 100<br>100 | O + 15 | 10 + 0.5<br>5 + 1 | 100<br>100 |
| G + 15 | 10 + 0.5<br>5 + 1 | 100<br>100 | P + 15 | 10 + 0.5<br>5 + 1 | 100<br>100 |
| H + 15 | 10 + 0.5<br>5 + 1 | 100<br>100 | Q + 15 | 10 + 0.5<br>5 + 1 | 100<br>100 |
| I + 15 | 10 + 0.5<br>5 + 1 | 100<br>100 | | | |

TABLE 14

| Test Compound No. | Test Concentration (ppm) | Prevention Value (%) | Test Compound No. | Test Concentration (ppm) | Prevention Value (%) |
|---|---|---|---|---|---|
| A + 17 | 10 + 0.5<br>5 + 1 | 100<br>100 | J + 17 | 10 + 0.5<br>5 + 1 | 100<br>100 |
| B + 17 | 10 + 0.5<br>5 + 1 | 100<br>100 | K + 17 | 10 + 0.5<br>5 + 1 | 100<br>100 |
| C + 17 | 10 + 0.5<br>5 + 1 | 100<br>100 | L + 17 | 10 + 0.5<br>5 + 1 | 100<br>100 |
| D + 17 | 10 + 0.5<br>5 + 1 | 100<br>100 | M + 17 | 10 + 0.5<br>5 + 1 | 100<br>100 |
| E + 17 | 10 + 0.5<br>5 + 1 | 100<br>100 | N + 17 | 10 + 0.5<br>5 + 1 | 100<br>100 |
| F + 17 | 10 + 0.5<br>5 + 1 | 100<br>100 | O + 17 | 10 + 0.5<br>5 + 1 | 100<br>100 |
| G + 17 | 10 + 0.5<br>5 + 1 | 100<br>100 | P + 17 | 10 + 0.5<br>5 + 1 | 100<br>100 |
| H + 17 | 10 + 0.5<br>5 + 1 | 100<br>100 | Q + 17 | 10 + 0.5<br>5 + 1 | 100<br>100 |
| I + 17 | 10 + 0.5<br>5 + 1 | 100<br>100 | | | |

TABLE 15

| Test Compound No. | Test Concentration (ppm) | Prevention Value (%) | Test Compound No. | Test Concentration (ppm) | Prevention Value (%) |
|---|---|---|---|---|---|
| A + 18 | 10 + 0.5<br>5 + 1 | 100<br>100 | J + 18 | 10 + 0.5<br>5 + 1 | 100<br>100 |
| B + 18 | 10 + 0.5<br>5 + 1 | 100<br>100 | K + 18 | 10 + 0.5<br>5 + 1 | 100<br>100 |
| C + 18 | 10 + 0.5<br>5 + 1 | 100<br>100 | L + 18 | 10 + 0.5<br>5 + 1 | 100<br>100 |
| D + 18 | 10 + 0.5<br>5 + 1 | 100<br>100 | M + 18 | 10 + 0.5<br>5 + 1 | 100<br>100 |
| E + 18 | 10 + 0.5<br>5 + 1 | 100<br>100 | N + 18 | 10 + 0.5<br>5 + 1 | 100<br>100 |
| F + 18 | 10 + 0.5<br>5 + 1 | 100<br>100 | O + 18 | 10 + 0.5<br>5 + 1 | 100<br>100 |
| G + 18 | 10 + 0.5<br>5 + 1 | 100<br>100 | P + 18 | 10 + 0.5<br>5 + 1 | 100<br>100 |
| H + 18 | 10 + 0.5<br>5 + 1 | 100<br>100 | Q + 18 | 10 + 0.5<br>5 + 1 | 100<br>100 |
| I + 18 | 10 + 0.5<br>5 + 1 | 100<br>100 | | | |

TABLE 16

| Test Compound No. | Test Concentration (ppm) | Prevention Value (%) | Test Compound No. | Test Concentration (ppm) | Prevention Value (%) |
|---|---|---|---|---|---|
| A + 19 | 10 + 0.5<br>5 + 1 | 100<br>100 | J + 19 | 10 + 0.5<br>5 + 1 | 100<br>100 |
| B + 19 | 10 + 0.5<br>5 + 1 | 100<br>100 | K + 19 | 10 + 0.5<br>5 + 1 | 100<br>100 |
| C + 19 | 10 + 0.5<br>5 + 1 | 100<br>100 | L + 19 | 10 + 0.5<br>5 + 1 | 100<br>100 |
| D + 19 | 10 + 0.5<br>5 + 1 | 100<br>100 | M + 19 | 10 + 0.5<br>5 + 1 | 100<br>100 |
| E + 19 | 10 + 0.5<br>5 + 1 | 100<br>100 | N + 19 | 10 + 0.5<br>5 + 1 | 100<br>100 |
| F + 19 | 10 + 0.5<br>5 + 1 | 100<br>100 | O + 19 | 10 + 0.5<br>5 + 1 | 100<br>100 |
| G + 19 | 10 + 0.5<br>5 + 1 | 100<br>100 | P + 19 | 10 + 0.5<br>5 + 1 | 100<br>100 |
| H + 19 | 10 + 0.5<br>5 + 1 | 100<br>100 | Q + 19 | 10 + 0.5<br>5 + 1 | 100<br>100 |
| I + 19 | 10 + 0.5<br>5 + 1 | 100<br>100 | | | |

TABLE 17

| Test Compound No. | Test Concentration (ppm) | Prevention Value (%) | Test Compound No. | Test Concentration (ppm) | Prevention Value (%) |
|---|---|---|---|---|---|
| A + 20 | 10 + 0.5<br>5 + 1 | 100<br>100 | J + 20 | 10 + 0.5<br>5 + 1 | 100<br>100 |
| B + 20 | 10 + 0.5<br>5 + 1 | 100<br>100 | K + 20 | 10 + 0.5<br>5 + 1 | 100<br>100 |
| C + 20 | 10 + 0.5<br>5 + 1 | 100<br>100 | L + 20 | 10 + 0.5<br>5 + 1 | 100<br>100 |
| D + 20 | 10 + 0.5<br>5 + 1 | 100<br>100 | M + 20 | 10 + 0.5<br>5 + 1 | 100<br>100 |
| E + 20 | 10 + 0.5<br>5 + 1 | 100<br>100 | N + 20 | 10 + 0.5<br>5 + 1 | 100<br>100 |
| F + 20 | 10 + 0.5<br>5 + 1 | 100<br>100 | O + 20 | 10 + 0.5<br>5 + 1 | 100<br>100 |
| G + 20 | 10 + 0.5<br>5 + 1 | 100<br>100 | P + 20 | 10 + 0.5<br>5 + 1 | 100<br>100 |
| H + 20 | 10 + 0.5<br>5 + 1 | 100<br>100 | Q + 20 | 10 + 0.5<br>5 + 1 | 100<br>100 |
| I + 20 | 10 + 0.5<br>5 + 1 | 100<br>100 | | | |

TABLE 18

| Test Compound No. | Test Concentration (ppm) | Prevention Value (%) | Test Compound No. | Test Concentration (ppm) | Prevention Value (%) |
|---|---|---|---|---|---|
| A + 21 | 10 + 0.5<br>5 + 1 | 100<br>100 | J + 21 | 10 + 0.5<br>5 + 1 | 100<br>100 |
| B + 21 | 10 + 0.5<br>5 + 1 | 100<br>100 | K + 21 | 10 + 0.5<br>5 + 1 | 100<br>100 |
| C + 21 | 10 + 0.5<br>5 + 1 | 100<br>100 | L + 21 | 10 + 0.5<br>5 + 1 | 100<br>100 |
| D + 21 | 10 + 0.5<br>5 + 1 | 100<br>100 | M + 21 | 10 + 0.5<br>5 + 1 | 100<br>100 |
| E + 21 | 10 + 0.5<br>5 + 1 | 100<br>100 | N + 21 | 10 + 0.5<br>5 + 1 | 100<br>100 |
| F + 21 | 10 + 0.5<br>5 + 1 | 100<br>100 | O + 21 | 10 + 0.5<br>5 + 1 | 100<br>100 |
| G + 21 | 10 + 0.5<br>5 + 1 | 100<br>100 | P + 21 | 10 + 0.5<br>5 + 1 | 100<br>100 |
| H + 21 | 10 + 0.5<br>5 + 1 | 100<br>100 | Q + 21 | 10 + 0.5<br>5 + 1 | 100<br>100 |
| I + 21 | 10 + 0.5<br>5 + 1 | 100<br>100 | | | |

TABLE 19

| Test Compound No. | Test Concentration (ppm) | Prevention Value (%) | Test Compound No. | Test Concentration (ppm) | Prevention Value (%) |
|---|---|---|---|---|---|
| A + 22 | 10 + 0.5<br>5 + 1 | 100<br>100 | J + 22 | 10 + 0.5<br>5 + 1 | 100<br>100 |
| B + 22 | 10 + 0.5<br>5 + 1 | 100<br>100 | K + 22 | 10 + 0.5<br>5 + 1 | 100<br>100 |
| C + 22 | 10 + 0.5<br>5 + 1 | 100<br>100 | L + 22 | 10 + 0.5<br>5 + 1 | 100<br>100 |
| D + 22 | 10 + 0.5<br>5 + 1 | 100<br>100 | M + 22 | 10 + 0.5<br>5 + 1 | 100<br>100 |
| E + 22 | 10 + 0.5<br>5 + 1 | 100<br>100 | N + 22 | 10 + 0.5<br>5 + 1 | 100<br>100 |
| F + 22 | 10 + 0.5<br>5 + 1 | 100<br>100 | O + 22 | 10 + 0.5<br>5 + 1 | 100<br>100 |
| G + 22 | 10 + 0.5<br>5 + 1 | 100<br>100 | P + 22 | 10 + 0.5<br>5 + 1 | 100<br>100 |
| H + 22 | 10 + 0.5<br>5 + 1 | 100<br>100 | Q + 22 | 10 + 0.5<br>5 + 1 | 100<br>100 |
| I + 22 | 10 + 0.5<br>5 + 1 | 100<br>100 | | | |

TABLE 20

| Test Compound No. | Test Concentration (ppm) | Prevention Value (%) | Test Compound No. | Test Concentration (ppm) | Prevention Value (%) |
|---|---|---|---|---|---|
| A + 23 | 10 + 0.5<br>5 + 1 | 100<br>100 | J + 23 | 10 + 0.5<br>5 + 1 | 100<br>100 |
| B + 23 | 10 + 0.5<br>5 + 1 | 100<br>100 | K + 23 | 10 + 0.5<br>5 + 1 | 100<br>100 |
| C + 23 | 10 + 0.5<br>5 + 1 | 100<br>100 | L + 23 | 10 + 0.5<br>5 + 1 | 100<br>100 |
| D + 23 | 10 + 0.5<br>5 + 1 | 100<br>100 | M + 23 | 10 + 0.5<br>5 + 1 | 100<br>100 |
| E + 23 | 10 + 0.5<br>5 + 1 | 100<br>100 | N + 23 | 10 + 0.5<br>5 + 1 | 100<br>100 |
| F + 23 | 10 + 0.5<br>5 + 1 | 100<br>100 | O + 23 | 10 + 0.5<br>5 + 1 | 100<br>100 |
| G + 23 | 10 + 0.5<br>5 + 1 | 100<br>100 | P + 23 | 10 + 0.5<br>5 + 1 | 100<br>100 |
| H + 23 | 10 + 0.5<br>5 + 1 | 100<br>100 | Q + 23 | 10 + 0.5<br>5 + 1 | 100<br>100 |
| I + 23 | 10 + 0.5<br>5 + 1 | 100<br>100 | | | |

TABLE 21

| Test Compound No. | Test Concentration (ppm) | Prevention Value (%) | Test Compound No. | Test Concentration (ppm) | Prevention Value (%) |
|---|---|---|---|---|---|
| A + 26 | 10 + 5<br>5 + 10 | 100<br>100 | J + 26 | 10 + 5<br>5 + 10 | 100<br>100 |
| B + 26 | 10 + 5<br>5 + 10 | 100<br>100 | K + 26 | 10 + 5<br>5 + 10 | 100<br>100 |
| C + 26 | 10 + 5<br>5 + 10 | 100<br>100 | L + 26 | 10 + 5<br>5 + 10 | 100<br>100 |
| D + 26 | 10 + 5<br>5 + 10 | 100<br>100 | M + 26 | 10 + 5<br>5 + 10 | 100<br>100 |
| E + 26 | 10 + 5<br>5 + 10 | 100<br>100 | N + 26 | 10 + 5<br>5 + 10 | 100<br>100 |
| F + 26 | 10 + 5<br>5 + 10 | 100<br>100 | O + 26 | 10 + 5<br>5 + 10 | 100<br>100 |
| G + 26 | 10 + 5<br>5 + 10 | 100<br>100 | P + 26 | 10 + 5<br>5 + 10 | 100<br>100 |
| H + 26 | 10 + 5<br>5 + 10 | 100<br>100 | Q + 26 | 10 + 5<br>5 + 10 | 100<br>100 |
| I + 26 | 10 + 5<br>5 + 10 | 100<br>100 | | | |

TABLE 22

| Test Compound No. | Test Concentration (ppm) | Prevention Value (%) | Test Compound No. | Test Concentration (ppm) | Prevention Value (%) |
|---|---|---|---|---|---|
| A + 27 | 10 + 0.5<br>5 + 1 | 100<br>100 | J + 27 | 10 + 0.5<br>5 + 1 | 100<br>100 |
| B + 27 | 10 + 0.5<br>5 + 1 | 100<br>100 | K + 27 | 10 + 0.5<br>5 + 1 | 100<br>100 |
| C + 27 | 10 + 0.5<br>5 + 1 | 100<br>100 | L + 27 | 10 + 0.5<br>5 + 1 | 100<br>100 |
| D + 27 | 10 + 0.5<br>5 + 1 | 100<br>100 | M + 27 | 10 + 0.5<br>5 + 1 | 100<br>100 |
| E + 27 | 10 + 0.5<br>5 + 1 | 100<br>100 | N + 27 | 10 + 0.5<br>5 + 1 | 100<br>100 |
| F + 27 | 10 + 0.5<br>5 + 1 | 100<br>100 | O + 27 | 10 + 0.5<br>5 + 1 | 100<br>100 |
| G + 27 | 10 + 0.5<br>5 + 1 | 100<br>100 | P + 27 | 10 + 0.5<br>5 + 1 | 100<br>100 |
| H + 27 | 10 + 0.5<br>5 + 1 | 100<br>100 | Q + 27 | 10 + 0.5<br>5 + 1 | 100<br>100 |
| I + 27 | 10 + 0.5<br>5 + 1 | 100<br>100 | | | |

TABLE 23

| Test Compound No. | Test Concentration (ppm) | Prevention Value (%) | Test Compound No. | Test Concentration (ppm) | Prevention Value (%) |
|---|---|---|---|---|---|
| A + 30 | 10 + 5<br>5 + 10 | 100<br>100 | J + 30 | 10 + 5<br>5 + 10 | 100<br>100 |
| B + 30 | 10 + 5<br>5 + 10 | 100<br>100 | K + 30 | 10 + 5<br>5 + 10 | 100<br>100 |
| C + 30 | 10 + 5<br>5 + 10 | 100<br>100 | L + 30 | 10 + 5<br>5 + 10 | 100<br>100 |
| D + 30 | 10 + 5<br>5 + 10 | 100<br>100 | M + 30 | 10 + 5<br>5 + 10 | 100<br>100 |
| E + 30 | 10 + 5<br>5 + 10 | 100<br>100 | N + 30 | 10 + 5<br>5 + 10 | 100<br>100 |
| F + 30 | 10 + 5<br>5 + 10 | 100<br>100 | O + 30 | 10 + 5<br>5 + 10 | 100<br>100 |
| G + 30 | 10 + 5<br>5 + 10 | 100<br>100 | P + 30 | 10 + 5<br>5 + 10 | 100<br>100 |
| H + 30 | 10 + 5<br>5 + 10 | 100<br>100 | Q + 30 | 10 + 5<br>5 + 10 | 100<br>100 |
| I + 30 | 10 + 5<br>5 + 10 | 100<br>100 | | | |

TABLE 24

| Test Compound No. | Test Concentration (ppm) | Prevention Value (%) | Test Compound No. | Test Concentration (ppm) | Prevention Value (%) |
|---|---|---|---|---|---|
| A + 31 | 10 + 5<br>5 + 10 | 100<br>100 | J + 31 | 10 + 5<br>5 + 10 | 100<br>100 |
| B + 31 | 10 + 5<br>5 + 10 | 100<br>100 | K + 31 | 10 + 5<br>5 + 10 | 100<br>100 |
| C + 31 | 10 + 5<br>5 + 10 | 100<br>100 | L + 31 | 10 + 5<br>5 + 10 | 100<br>100 |
| D + 31 | 10 + 5<br>5 + 10 | 100<br>100 | M + 31 | 10 + 5<br>5 + 10 | 100<br>100 |
| E + 31 | 10 + 5<br>5 + 10 | 100<br>100 | N + 31 | 10 + 5<br>5 + 10 | 100<br>100 |
| F + 31 | 10 + 5<br>5 + 10 | 100<br>100 | O + 31 | 10 + 5<br>5 + 10 | 100<br>100 |
| G + 31 | 10 + 5<br>5 + 10 | 100<br>100 | P + 31 | 10 + 5<br>5 + 10 | 100<br>100 |
| H + 31 | 10 + 5<br>5 + 10 | 100<br>100 | Q + 31 | 10 + 5<br>5 + 10 | 100<br>100 |
| I + 31 | 10 + 5<br>5 + 10 | 100<br>100 | | | |

TABLE 25

| Test Compound No. | Test Concentration (ppm) | Prevention Value (%) | Test Compound No. | Test Concentration (ppm) | Prevention Value (%) |
|---|---|---|---|---|---|
| A + 32 | 10 + 5<br>5 + 10 | 100<br>100 | J + 32 | 10 + 5<br>5 + 10 | 100<br>100 |
| B + 32 | 10 + 5<br>5 + 10 | 100<br>100 | K + 32 | 10 + 5<br>5 + 10 | 100<br>100 |
| C + 32 | 10 + 5<br>5 + 10 | 100<br>100 | L + 32 | 10 + 5<br>5 + 10 | 100<br>100 |
| D + 32 | 10 + 5<br>5 + 10 | 100<br>100 | M + 32 | 10 + 5<br>5 + 10 | 100<br>100 |
| E + 32 | 10 + 5<br>5 + 10 | 100<br>100 | N + 32 | 10 + 5<br>5 + 10 | 100<br>100 |
| F + 32 | 10 + 5<br>5 + 10 | 100<br>100 | O + 32 | 10 + 5<br>5 + 10 | 100<br>100 |
| G + 32 | 10 + 5<br>5 + 10 | 100<br>100 | P + 32 | 10 + 5<br>5 + 10 | 100<br>100 |
| H + 32 | 10 + 5<br>5 + 10 | 100<br>100 | Q + 32 | 10 + 5<br>5 + 10 | 100<br>100 |
| I + 32 | 10 + 5<br>5 + 10 | 100<br>100 | | | |

TABLE 26

| Test Compound No. | Test Concentration (ppm) | Prevention Value (%) | Test Compound No. | Test Concentration (ppm) | Prevention Value (%) |
|---|---|---|---|---|---|
| A + 36 | 10 + 5<br>5 + 10 | 100<br>100 | J + 36 | 10 + 5<br>5 + 10 | 100<br>100 |
| B + 36 | 10 + 5<br>5 + 10 | 100<br>100 | K + 36 | 10 + 5<br>5 + 10 | 100<br>100 |
| C + 36 | 10 + 5<br>5 + 10 | 100<br>100 | L + 36 | 10 + 5<br>5 + 10 | 100<br>100 |
| D + 36 | 10 + 5<br>5 + 10 | 100<br>100 | M + 36 | 10 + 5<br>5 + 10 | 100<br>100 |
| E + 36 | 10 + 5<br>5 + 10 | 100<br>100 | N + 36 | 10 + 5<br>5 + 10 | 100<br>100 |
| F + 36 | 10 + 5<br>5 + 10 | 100<br>100 | O + 36 | 10 + 5<br>5 + 10 | 100<br>100 |
| G + 36 | 10 + 5<br>5 + 10 | 100<br>100 | P + 36 | 10 + 5<br>5 + 10 | 100<br>100 |
| H + 36 | 10 + 5<br>5 + 10 | 100<br>100 | Q + 36 | 10 + 5<br>5 + 10 | 100<br>100 |
| I + 36 | 10 + 5<br>5 + 10 | 100<br>100 | | | |

TABLE 27

| Test Compound No. | Test Concentration (ppm) | Prevention Value (%) | Test Compound No. | Test Concentration (ppm) | Prevention Value (%) |
|---|---|---|---|---|---|
| A + 37 | 10 + 0.5<br>5 + 1 | 100<br>100 | J + 37 | 10 + 0.5<br>5 + 1 | 100<br>100 |
| B + 37 | 10 + 0.5<br>5 + 1 | 100<br>100 | K + 37 | 10 + 0.5<br>5 + 1 | 100<br>100 |
| C + 37 | 10 + 0.5<br>5 + 1 | 100<br>100 | L + 37 | 10 + 0.5<br>5 + 1 | 100<br>100 |
| D + 37 | 10 + 0.5<br>5 + 1 | 100<br>100 | M + 37 | 10 + 0.5<br>5 + 1 | 100<br>100 |
| E + 37 | 10 + 0.5<br>5 + 1 | 100<br>100 | N + 37 | 10 + 0.5<br>5 + 1 | 100<br>100 |
| F + 37 | 10 + 0.5<br>5 + 1 | 100<br>100 | O + 37 | 10 + 0.5<br>5 + 1 | 100<br>100 |
| G + 37 | 10 + 0.5<br>5 + 1 | 100<br>100 | P + 37 | 10 + 0.5<br>5 + 1 | 100<br>100 |
| H + 37 | 10 + 0.5<br>5 + 1 | 100<br>100 | Q + 37 | 10 + 0.5<br>5 + 1 | 100<br>100 |
| I + 37 | 10 + 0.5<br>5 + 1 | 100<br>100 | | | |

TABLE 28

| Test Compound No. | Test Concentration (ppm) | Prevention Value (%) | Test Compound No. | Test Concentration (ppm) | Prevention Value (%) |
|---|---|---|---|---|---|
| A + 38 | 10 + 0.5<br>5 + 1 | 100<br>100 | J + 38 | 10 + 0.5<br>5 + 1 | 100<br>100 |
| B + 38 | 10 + 0.5<br>5 + 1 | 100<br>100 | K + 38 | 10 + 0.5<br>5 + 1 | 100<br>100 |
| C + 38 | 10 + 0.5<br>5 + 1 | 100<br>100 | L + 38 | 10 + 0.5<br>5 + 1 | 100<br>100 |
| D + 38 | 10 + 0.5<br>5 + 1 | 100<br>100 | M + 38 | 10 + 0.5<br>5 + 1 | 100<br>100 |
| E + 38 | 10 + 0.5<br>5 + 1 | 100<br>100 | N + 38 | 10 + 0.5<br>5 + 1 | 100<br>100 |
| F + 38 | 10 + 0.5<br>5 + 1 | 100<br>100 | O + 38 | 10 + 0.5<br>5 + 1 | 100<br>100 |
| G + 38 | 10 + 0.5<br>5 + 1 | 100<br>100 | P + 38 | 10 + 0.5<br>5 + 1 | 100<br>100 |
| H + 38 | 10 + 0.5<br>5 + 1 | 100<br>100 | Q + 38 | 10 + 0.5<br>5 + 1 | 100<br>100 |
| I + 38 | 10 + 0.5<br>5 + 1 | 100<br>100 | | | |

TABLE 29

| Test Compound No. | Test Concentration (ppm) | Prevention Value (%) | Test Compound No. | Test Concentration (ppm) | Prevention Value (%) |
|---|---|---|---|---|---|
| A + 39 | 10 + 100<br>5 + 200 | 100<br>100 | J + 39 | 10 + 100<br>5 + 200 | 100<br>100 |
| B + 39 | 10 + 100<br>5 + 200 | 100<br>100 | K + 39 | 10 + 100<br>5 + 200 | 100<br>100 |
| C + 39 | 10 + 100<br>5 + 200 | 100<br>100 | L + 39 | 10 + 100<br>5 + 200 | 100<br>100 |
| D + 39 | 10 + 100<br>5 + 200 | 100<br>100 | M + 39 | 10 + 100<br>5 + 200 | 100<br>100 |
| E + 39 | 10 + 100<br>5 + 200 | 100<br>100 | N + 39 | 10 + 100<br>5 + 200 | 100<br>100 |
| F + 39 | 10 + 100<br>5 + 200 | 100<br>100 | O + 39 | 10 + 100<br>5 + 200 | 100<br>100 |
| G + 39 | 10 + 100<br>5 + 200 | 100<br>100 | P + 39 | 10 + 100<br>5 + 200 | 100<br>100 |
| H + 39 | 10 + 100<br>5 + 200 | 100<br>100 | Q + 39 | 10 + 100<br>5 + 200 | 100<br>100 |
| I + 39 | 10 + 100<br>5 + 200 | 100<br>100 | | | |

TEST EXAMPLE 2

(Curing Effect on Wheat Powdery Mildew)

Wheat (species: *Norin No. 61*) was cultivated in a plastic pot having a diameter of 7 cm. When the plant reached the two-leaf stage, conidia of ***Erysiphe graminis*** which causes wheat powdery mildew were inoculated by spraying. After the inoculation, the plant was cultivated in a dark room at 20 °C for 48 hours. Then, 10 mℓ of a test composition adjusted to a prescribed concentration with water was sprayed over the plant using a spray gun. Regarding each test composition, four lots each having 13 plants were employed and two lots of them were treated with the test composition (test lot) and the other two lots were not treated with the test composition (control lot). After the treatment, the plants were cultivated at 20 °C for 6 days with 12 hour-photoperiod. On the 7th day after the inoculation, the lesions on the first and second leaves was investigated, and the prevention value (%) was calculated in the same manner as in Test Example 1. The results obtained are shown in Tables 30 to 55 below.

TABLE 30

| Test Compound No. | Test Concentration (ppm) | Prevention Value (%) | Test Compound No. | Test Concentration (ppm) | Prevention Value (%) |
|---|---|---|---|---|---|
| A | 5 | 40 | 6 | 0.5 | 50 |
| B | 5 | 50 | 8 | 0.5 | 55 |
| C | 5 | 45 | 9 | 0.5 | 45 |
| D | 5 | 35 | 10 | 0.5 | 50 |
| E | 5 | 55 | 13 | 0.5 | 40 |
| F | 5 | 45 | 14 | 0.5 | 40 |
| G | 5 | 40 | 15 | 0.5 | 45 |
| H | 5 | 50 | 16 | 0.5 | 50 |
| I | 5 | 40 | 23 | 0.5 | 40 |
| J | 5 | 55 | 24 | 0.5 | 40 |
| K | 5 | 45 | 25 | 0.5 | 45 |
| L | 5 | 40 | 26 | 1 | 45 |
| M | 5 | 35 | 28 | 0.5 | 50 |
| N | 5 | 40 | 29 | 0.5 | 40 |
| O | 5 | 45 | 31 | 1 | 55 |
| P | 5 | 40 | 32 | 10 | 50 |
| Q | 5 | 50 | 33 | 5 | 45 |
| 1 | 0.5 | 55 | 34 | 5 | 40 |
| 2 | 0.5 | 45 | 35 | 5 | 45 |
| 3 | 0.5 | 50 | 37 | 0.1 | 55 |
| 4 | 0.5 | 45 | 38 | 0.1 | 40 |
| 5 | 0.5 | 40 | | | |

TABLE 31

| Test Compound No. | Test Concentration (ppm) | Prevention Value (%) | Test Compound No. | Test Concentration (ppm) | Prevention Value (%) |
|---|---|---|---|---|---|
| A + 1 | 5 + 0.25<br>1 + 0.5 | 100<br>100 | J + 1 | 5 + 0.25<br>1 + 0.5 | 100<br>100 |
| B + 1 | 5 + 0.25<br>1 + 0.5 | 100<br>100 | K + 1 | 5 + 0.25<br>1 + 0.5 | 100<br>100 |
| C + 1 | 5 + 0.25<br>1 + 0.5 | 100<br>100 | L + 1 | 5 + 0.25<br>1 + 0.5 | 100<br>100 |
| D + 1 | 5 + 0.25<br>1 + 0.5 | 100<br>100 | M + 1 | 5 + 0.25<br>1 + 0.5 | 100<br>100 |
| E + 1 | 5 + 0.25<br>1 + 0.5 | 100<br>100 | N + 1 | 5 + 0.25<br>1 + 0.5 | 100<br>100 |
| F + 1 | 5 + 0.25<br>1 + 0.5 | 100<br>100 | O + 1 | 5 + 0.25<br>1 + 0.5 | 100<br>100 |
| G + 1 | 5 + 0.25<br>1 + 0.5 | 100<br>100 | P + 1 | 5 + 0.25<br>1 + 0.5 | 100<br>100 |
| H + 1 | 5 + 0.25<br>1 + 0.5 | 100<br>100 | Q + 1 | 5 + 0.25<br>1 + 0.5 | 100<br>100 |
| I + 1 | 5 + 0.25<br>1 + 0.5 | 100<br>100 | | | |

TABLE 32

| Test Compound No. | Test Concentration (ppm) | Prevention Value (%) | Test Compound No. | Test Concentration (ppm) | Prevention Value (%) |
|---|---|---|---|---|---|
| A + 2 | 5 + 0.25<br>1 + 0.5 | 100<br>100 | J + 2 | 5 + 0.25<br>1 + 0.5 | 100<br>100 |
| B + 2 | 5 + 0.25<br>1 + 0.5 | 100<br>100 | K + 2 | 5 + 0.25<br>1 + 0.5 | 100<br>100 |
| C + 2 | 5 + 0.25<br>1 + 0.5 | 100<br>100 | L + 2 | 5 + 0.25<br>1 + 0.5 | 100<br>100 |
| D + 2 | 5 + 0.25<br>1 + 0.5 | 100<br>100 | M + 2 | 5 + 0.25<br>1 + 0.5 | 100<br>100 |
| E + 2 | 5 + 0.25<br>1 + 0.5 | 100<br>100 | N + 2 | 5 + 0.25<br>1 + 0.5 | 100<br>100 |
| F + 2 | 5 + 0.25<br>1 + 0.5 | 100<br>100 | O + 2 | 5 + 0.25<br>1 + 0.5 | 100<br>100 |
| G + 2 | 5 + 0.25<br>1 + 0.5 | 100<br>100 | P + 2 | 5 + 0.25<br>1 + 0.5 | 100<br>100 |
| H + 2 | 5 + 0.25<br>1 + 0.5 | 100<br>100 | Q + 2 | 5 + 0.25<br>1 + 0.5 | 100<br>100 |
| I + 2 | 5 + 0.25<br>1 + 0.5 | 100<br>100 | | | |

TABLE 33

| Test Compound No. | Test Concentration (ppm) | Prevention Value (%) | Test Compound No. | Test Concentration (ppm) | Prevention Value (%) |
|---|---|---|---|---|---|
| A + 3 | 5 + 0.25<br>1 + 0.5 | 100<br>100 | J + 3 | 5 + 0.25<br>1 + 0.5 | 100<br>100 |
| B + 3 | 5 + 0.25<br>1 + 0.5 | 100<br>100 | K + 3 | 5 + 0.25<br>1 + 0.5 | 100<br>100 |
| C + 3 | 5 + 0.25<br>1 + 0.5 | 100<br>100 | L + 3 | 5 + 0.25<br>1 + 0.5 | 100<br>100 |
| D + 3 | 5 + 0.25<br>1 + 0.5 | 100<br>100 | M + 3 | 5 + 0.25<br>1 + 0.5 | 100<br>100 |
| E + 3 | 5 + 0.25<br>1 + 0.5 | 100<br>100 | N + 3 | 5 + 0.25<br>1 + 0.5 | 100<br>100 |
| F + 3 | 5 + 0.25<br>1 + 0.5 | 100<br>100 | O + 3 | 5 + 0.25<br>1 + 0.5 | 100<br>100 |
| G + 3 | 5 + 0.25<br>1 + 0.5 | 100<br>100 | P + 3 | 5 + 0.25<br>1 + 0.5 | 100<br>100 |
| H + 3 | 5 + 0.25<br>1 + 0.5 | 100<br>100 | Q + 3 | 5 + 0.25<br>1 + 0.5 | 100<br>100 |
| I + 3 | 5 + 0.25<br>1 + 0.5 | 100<br>100 | | | |

TABLE 34

| Test Compound No. | Test Concentration (ppm) | Prevention Value (%) | Test Compound No. | Test Concentration (ppm) | Prevention Value (%) |
|---|---|---|---|---|---|
| A + 4 | 5 + 0.25<br>1 + 0.5 | 100<br>100 | J + 4 | 5 + 0.25<br>1 + 0.5 | 100<br>100 |
| B + 4 | 5 + 0.25<br>1 + 0.5 | 100<br>100 | K + 4 | 5 + 0.25<br>1 + 0.5 | 100<br>100 |
| C + 4 | 5 + 0.25<br>1 + 0.5 | 100<br>100 | L + 4 | 5 + 0.25<br>1 + 0.5 | 100<br>100 |
| D + 4 | 5 + 0.25<br>1 + 0.5 | 100<br>100 | M + 4 | 5 + 0.25<br>1 + 0.5 | 100<br>100 |
| E + 4 | 5 + 0.25<br>1 + 0.5 | 100<br>100 | N + 4 | 5 + 0.25<br>1 + 0.5 | 100<br>100 |
| F + 4 | 5 + 0.25<br>1 + 0.5 | 100<br>100 | O + 4 | 5 + 0.25<br>1 + 0.5 | 100<br>100 |
| G + 4 | 5 + 0.25<br>1 + 0.5 | 100<br>100 | P + 4 | 5 + 0.25<br>1 + 0.5 | 100<br>100 |
| H + 4 | 5 + 0.25<br>1 + 0.5 | 100<br>100 | Q + 4 | 5 + 0.25<br>1 + 0.5 | 100<br>100 |
| I + 4 | 5 + 0.25<br>1 + 0.5 | 100<br>100 | | | |

TABLE 35

| Test Compound No. | Test Concentration (ppm) | Prevention Value (%) | Test Compound No. | Test Concentration (ppm) | Prevention Value (%) |
|---|---|---|---|---|---|
| A + 5 | 5 + 0.25<br>1 + 0.5 | 100<br>100 | J + 5 | 5 + 0.25<br>1 + 0.5 | 100<br>100 |
| B + 5 | 5 + 0.25<br>1 + 0.5 | 100<br>100 | K + 5 | 5 + 0.25<br>1 + 0.5 | 100<br>100 |
| C + 5 | 5 + 0.25<br>1 + 0.5 | 100<br>100 | L + 5 | 5 + 0.25<br>1 + 0.5 | 100<br>100 |
| D + 5 | 5 + 0.25<br>1 + 0.5 | 100<br>100 | M + 5 | 5 + 0.25<br>1 + 0.5 | 100<br>100 |
| E + 5 | 5 + 0.25<br>1 + 0.5 | 100<br>100 | N + 5 | 5 + 0.25<br>1 + 0.5 | 100<br>100 |
| F + 5 | 5 + 0.25<br>1 + 0.5 | 100<br>100 | O + 5 | 5 + 0.25<br>1 + 0.5 | 100<br>100 |
| G + 5 | 5 + 0.25<br>1 + 0.5 | 100<br>100 | P + 5 | 5 + 0.25<br>1 + 0.5 | 100<br>100 |
| H + 5 | 5 + 0.25<br>1 + 0.5 | 100<br>100 | Q + 5 | 5 + 0.25<br>1 + 0.5 | 100<br>100 |
| I + 5 | 5 + 0.25<br>1 + 0.5 | 100<br>100 | | | |

TABLE 36

| Test Compound No. | Test Concentration (ppm) | Prevention Value (%) | Test Compound No. | Test Concentration (ppm) | Prevention Value (%) |
|---|---|---|---|---|---|
| A + 6 | 5 + 0.25<br>1 + 0.5 | 100<br>100 | J + 6 | 5 + 0.25<br>1 + 0.5 | 100<br>100 |
| B + 6 | 5 + 0.25<br>1 + 0.5 | 100<br>100 | K + 6 | 5 + 0.25<br>1 + 0.5 | 100<br>100 |
| C + 6 | 5 + 0.25<br>1 + 0.5 | 100<br>100 | L + 6 | 5 + 0.25<br>1 + 0.5 | 100<br>100 |
| D + 6 | 5 + 0.25<br>1 + 0.5 | 100<br>100 | M + 6 | 5 + 0.25<br>1 + 0.5 | 100<br>100 |
| E + 6 | 5 + 0.25<br>1 + 0.5 | 100<br>100 | N + 6 | 5 + 0.25<br>1 + 0.5 | 100<br>100 |
| F + 6 | 5 + 0.25<br>1 + 0.5 | 100<br>100 | O + 6 | 5 + 0.25<br>1 + 0.5 | 100<br>100 |
| G + 6 | 5 + 0.25<br>1 + 0.5 | 100<br>100 | P + 6 | 5 + 0.25<br>1 + 0.5 | 100<br>100 |
| H + 6 | 5 + 0.25<br>1 + 0.5 | 100<br>100 | Q + 6 | 5 + 0.25<br>1 + 0.5 | 100<br>100 |
| I + 6 | 5 + 0.25<br>1 + 0.5 | 100<br>100 | | | |

TABLE 37

| Test Compound No. | Test Concentration (ppm) | Prevention Value (%) | Test Compound No. | Test Concentration (ppm) | Prevention Value (%) |
|---|---|---|---|---|---|
| A + 8 | 5 + 0.25<br>1 + 0.5 | 100<br>100 | J + 8 | 5 + 0.25<br>1 + 0.5 | 100<br>100 |
| B + 8 | 5 + 0.25<br>1 + 0.5 | 100<br>100 | K + 8 | 5 + 0.25<br>1 + 0.5 | 100<br>100 |
| C + 8 | 5 + 0.25<br>1 + 0.5 | 100<br>100 | L + 8 | 5 + 0.25<br>1 + 0.5 | 100<br>100 |
| D + 8 | 5 + 0.25<br>1 + 0.5 | 100<br>100 | M + 8 | 5 + 0.25<br>1 + 0.5 | 100<br>100 |
| E + 8 | 5 + 0.25<br>1 + 0.5 | 100<br>100 | N + 8 | 5 + 0.25<br>1 + 0.5 | 100<br>100 |
| F + 8 | 5 + 0.25<br>1 + 0.5 | 100<br>100 | O + 8 | 5 + 0.25<br>1 + 0.5 | 100<br>100 |
| G + 8 | 5 + 0.25<br>1 + 0.5 | 100<br>100 | P + 8 | 5 + 0.25<br>1 + 0.5 | 100<br>100 |
| H + 8 | 5 + 0.25<br>1 + 0.5 | 100<br>100 | Q + 8 | 5 + 0.25<br>1 + 0.5 | 100<br>100 |
| I + 8 | 5 + 0.25<br>1 + 0.5 | 100<br>100 | | | |

TABLE 38

| Test Compound No. | Test Concentration (ppm) | Prevention Value (%) | Test Compound No. | Test Concentration (ppm) | Prevention Value (%) |
|---|---|---|---|---|---|
| A + 9 | 5 + 0.25<br>1 + 0.5 | 100<br>100 | J + 9 | 5 + 0.25<br>1 + 0.5 | 100<br>100 |
| B + 9 | 5 + 0.25<br>1 + 0.5 | 100<br>100 | K + 9 | 5 + 0.25<br>1 + 0.5 | 100<br>100 |
| C + 9 | 5 + 0.25<br>1 + 0.5 | 100<br>100 | L + 9 | 5 + 0.25<br>1 + 0.5 | 100<br>100 |
| D + 9 | 5 + 0.25<br>1 + 0.5 | 100<br>100 | M + 9 | 5 + 0.25<br>1 + 0.5 | 100<br>100 |
| E + 9 | 5 + 0.25<br>1 + 0.5 | 100<br>100 | N + 9 | 5 + 0.25<br>1 + 0.5 | 100<br>100 |
| F + 9 | 5 + 0.25<br>1 + 0.5 | 100<br>100 | O + 9 | 5 + 0.25<br>1 + 0.5 | 100<br>100 |
| G + 9 | 5 + 0.25<br>1 + 0.5 | 100<br>100 | P + 9 | 5 + 0.25<br>1 + 0.5 | 100<br>100 |
| H + 9 | 5 + 0.25<br>1 + 0.5 | 100<br>100 | Q + 9 | 5 + 0.25<br>1 + 0.5 | 100<br>100 |
| I + 9 | 5 + 0.25<br>1 + 0.5 | 100<br>100 | | | |

TABLE 39

| Test Compound No. | Test Concentration (ppm) | Prevention Value (%) | Test Compound No. | Test Concentration (ppm) | Prevention Value (%) |
|---|---|---|---|---|---|
| A + 10 | 5 + 0.25<br>1 + 0.5 | 100<br>100 | J + 10 | 5 + 0.25<br>1 + 0.5 | 100<br>100 |
| B + 10 | 5 + 0.25<br>1 + 0.5 | 100<br>100 | K + 10 | 5 + 0.25<br>1 + 0.5 | 100<br>100 |
| C + 10 | 5 + 0.25<br>1 + 0.5 | 100<br>100 | L + 10 | 5 + 0.25<br>1 + 0.5 | 100<br>100 |
| D + 10 | 5 + 0.25<br>1 + 0.5 | 100<br>100 | M + 10 | 5 + 0.25<br>1 + 0.5 | 100<br>100 |
| E + 10 | 5 + 0.25<br>1 + 0.5 | 100<br>100 | N + 10 | 5 + 0.25<br>1 + 0.5 | 100<br>100 |
| F + 10 | 5 + 0.25<br>1 + 0.5 | 100<br>100 | O + 10 | 5 + 0.25<br>1 + 0.5 | 100<br>100 |
| G + 10 | 5 + 0.25<br>1 + 0.5 | 100<br>100 | P + 10 | 5 + 0.25<br>1 + 0.5 | 100<br>100 |
| H + 10 | 5 + 0.25<br>1 + 0.5 | 100<br>100 | Q + 10 | 5 + 0.25<br>1 + 0.5 | 100<br>100 |
| I + 10 | 5 + 0.25<br>1 + 0.5 | 100<br>100 | | | |

TABLE 40

| Test Compound No. | Test Concentration (ppm) | Prevention Value (%) | Test Compound No. | Test Concentration (ppm) | Prevention Value (%) |
|---|---|---|---|---|---|
| A + 13 | 5 + 0.25<br>1 + 0.5 | 100<br>100 | J + 13 | 5 + 0.25<br>1 + 0.5 | 100<br>100 |
| B + 13 | 5 + 0.25<br>1 + 0.5 | 100<br>100 | K + 13 | 5 + 0.25<br>1 + 0.5 | 100<br>100 |
| C + 13 | 5 + 0.25<br>1 + 0.5 | 100<br>100 | L + 13 | 5 + 0.25<br>1 + 0.5 | 100<br>100 |
| D + 13 | 5 + 0.25<br>1 + 0.5 | 100<br>100 | M + 13 | 5 + 0.25<br>1 + 0.5 | 100<br>100 |
| E + 13 | 5 + 0.25<br>1 + 0.5 | 100<br>100 | N + 13 | 5 + 0.25<br>1 + 0.5 | 100<br>100 |
| F + 13 | 5 + 0.25<br>1 + 0.5 | 100<br>100 | O + 13 | 5 + 0.25<br>1 + 0.5 | 100<br>100 |
| G + 13 | 5 + 0.25<br>1 + 0.5 | 100<br>100 | P + 13 | 5 + 0.25<br>1 + 0.5 | 100<br>100 |
| H + 13 | 5 + 0.25<br>1 + 0.5 | 100<br>100 | Q + 13 | 5 + 0.25<br>1 + 0.5 | 100<br>100 |
| I + 13 | 5 + 0.25<br>1 + 0.5 | 100<br>100 | | | |

TABLE 41

| Test Compound No. | Test Concentration (ppm) | Prevention Value (%) | Test Compound No. | Test Concentration (ppm) | Prevention Value (%) |
|---|---|---|---|---|---|
| A + 14 | 5 + 0.25<br>1 + 0.5 | 100<br>100 | J + 14 | 5 + 0.25<br>1 + 0.5 | 100<br>100 |
| B + 14 | 5 + 0.25<br>1 + 0.5 | 100<br>100 | K + 14 | 5 + 0.25<br>1 + 0.5 | 100<br>100 |
| C + 14 | 5 + 0.25<br>1 + 0.5 | 100<br>100 | L + 14 | 5 + 0.25<br>1 + 0.5 | 100<br>100 |
| D + 14 | 5 + 0.25<br>1 + 0.5 | 100<br>100 | M + 14 | 5 + 0.25<br>1 + 0.5 | 100<br>100 |
| E + 14 | 5 + 0.25<br>1 + 0.5 | 100<br>100 | N + 14 | 5 + 0.25<br>1 + 0.5 | 100<br>100 |
| F + 14 | 5 + 0.25<br>1 + 0.5 | 100<br>100 | O + 14 | 5 + 0.25<br>1 + 0.5 | 100<br>100 |
| G + 14 | 5 + 0.25<br>1 + 0.5 | 100<br>100 | P + 14 | 5 + 0.25<br>1 + 0.5 | 100<br>100 |
| H + 14 | 5 + 0.25<br>1 + 0.5 | 100<br>100 | Q + 14 | 5 + 0.25<br>1 + 0.5 | 100<br>100 |
| I + 14 | 5 + 0.25<br>1 + 0.5 | 100<br>100 | | | |

TABLE 42

| Test Compound No. | Test Concentration (ppm) | Prevention Value (%) | Test Compound No. | Test Concentration (ppm) | Prevention Value (%) |
|---|---|---|---|---|---|
| A + 15 | 5 + 0.25<br>1 + 0.5 | 100<br>100 | J + 15 | 5 + 0.25<br>1 + 0.5 | 100<br>100 |
| B + 15 | 5 + 0.25<br>1 + 0.5 | 100<br>100 | K + 15 | 5 + 0.25<br>1 + 0.5 | 100<br>100 |
| C + 15 | 5 + 0.25<br>1 + 0.5 | 100<br>100 | L + 15 | 5 + 0.25<br>1 + 0.5 | 100<br>100 |
| D + 15 | 5 + 0.25<br>1 + 0.5 | 100<br>100 | M + 15 | 5 + 0.25<br>1 + 0.5 | 100<br>100 |
| E + 15 | 5 + 0.25<br>1 + 0.5 | 100<br>100 | N + 15 | 5 + 0.25<br>1 + 0.5 | 100<br>100 |
| F + 15 | 5 + 0.25<br>1 + 0.5 | 100<br>100 | O + 15 | 5 + 0.25<br>1 + 0.5 | 100<br>100 |
| G + 15 | 5 + 0.25<br>1 + 0.5 | 100<br>100 | P + 15 | 5 + 0.25<br>1 + 0.5 | 100<br>100 |
| H + 15 | 5 + 0.25<br>1 + 0.5 | 100<br>100 | Q + 15 | 5 + 0.25<br>1 + 0.5 | 100<br>100 |
| I + 15 | 5 + 0.25<br>1 + 0.5 | 100<br>100 | | | |

TABLE 43

| Test Compound No. | Test Concentration (ppm) | Prevention Value (%) | Test Compound No. | Test Concentration (ppm) | Prevention Value (%) |
|---|---|---|---|---|---|
| A + 16 | 5 + 0.25<br>1 + 0.5 | 100<br>100 | J + 16 | 5 + 0.25<br>1 + 0.5 | 100<br>100 |
| B + 16 | 5 + 0.25<br>1 + 0.5 | 100<br>100 | K + 16 | 5 + 0.25<br>1 + 0.5 | 100<br>100 |
| C + 16 | 5 + 0.25<br>1 + 0.5 | 100<br>100 | L + 16 | 5 + 0.25<br>1 + 0.5 | 100<br>100 |
| D + 16 | 5 + 0.25<br>1 + 0.5 | 100<br>100 | M + 16 | 5 + 0.25<br>1 + 0.5 | 100<br>100 |
| E + 16 | 5 + 0.25<br>1 + 0.5 | 100<br>100 | N + 16 | 5 + 0.25<br>1 + 0.5 | 100<br>100 |
| F + 16 | 5 + 0.25<br>1 + 0.5 | 100<br>100 | O + 16 | 5 + 0.25<br>1 + 0.5 | 100<br>100 |
| G + 16 | 5 + 0.25<br>1 + 0.5 | 100<br>100 | P + 16 | 5 + 0.25<br>1 + 0.5 | 100<br>100 |
| H + 16 | 5 + 0.25<br>1 + 0.5 | 100<br>100 | Q + 16 | 5 + 0.25<br>1 + 0.5 | 100<br>100 |
| I + 16 | 5 + 0.25<br>1 + 0.5 | 100<br>100 | | | |

TABLE 44

| Test Compound No. | Test Concentration (ppm) | Prevention Value (%) | Test Compound No. | Test Concentration (ppm) | Prevention Value (%) |
|---|---|---|---|---|---|
| A + 23 | 5 + 0.25<br>1 + 0.5 | 100<br>100 | J + 23 | 5 + 0.25<br>1 + 0.5 | 100<br>100 |
| B + 23 | 5 + 0.25<br>1 + 0.5 | 100<br>100 | K + 23 | 5 + 0.25<br>1 + 0.5 | 100<br>100 |
| C + 23 | 5 + 0.25<br>1 + 0.5 | 100<br>100 | L + 23 | 5 + 0.25<br>1 + 0.5 | 100<br>100 |
| D + 23 | 5 + 0.25<br>1 + 0.5 | 100<br>100 | M + 23 | 5 + 0.25<br>1 + 0.5 | 100<br>100 |
| E + 23 | 5 + 0.25<br>1 + 0.5 | 100<br>100 | N + 23 | 5 + 0.25<br>1 + 0.5 | 100<br>100 |
| F + 23 | 5 + 0.25<br>1 + 0.5 | 100<br>100 | O + 23 | 5 + 0.25<br>1 + 0.5 | 100<br>100 |
| G + 23 | 5 + 0.25<br>1 + 0.5 | 100<br>100 | P + 23 | 5 + 0.25<br>1 + 0.5 | 100<br>100 |
| H + 23 | 5 + 0.25<br>1 + 0.5 | 100<br>100 | Q + 23 | 5 + 0.25<br>1 + 0.5 | 100<br>100 |
| I + 23 | 5 + 0.25<br>1 + 0.5 | 100<br>100 | | | |

TABLE 45

| Test Compound No. | Test Concentration (ppm) | Prevention Value (%) | Test Compound No. | Test Concentration (ppm) | Prevention Value (%) |
|---|---|---|---|---|---|
| A + 24 | 5 + 0.25<br>1 + 0.5 | 100<br>100 | J + 24 | 5 + 0.25<br>1 + 0.5 | 100<br>100 |
| B + 24 | 5 + 0.25<br>1 + 0.5 | 100<br>100 | K + 24 | 5 + 0.25<br>1 + 0.5 | 100<br>100 |
| C + 24 | 5 + 0.25<br>1 + 0.5 | 100<br>100 | L + 24 | 5 + 0.25<br>1 + 0.5 | 100<br>100 |
| D + 24 | 5 + 0.25<br>1 + 0.5 | 100<br>100 | M + 24 | 5 + 0.25<br>1 + 0.5 | 100<br>100 |
| E + 24 | 5 + 0.25<br>1 + 0.5 | 100<br>100 | N + 24 | 5 + 0.25<br>1 + 0.5 | 100<br>100 |
| F + 24 | 5 + 0.25<br>1 + 0.5 | 100<br>100 | O + 24 | 5 + 0.25<br>1 + 0.5 | 100<br>100 |
| G + 24 | 5 + 0.25<br>1 + 0.5 | 100<br>100 | P + 24 | 5 + 0.25<br>1 + 0.5 | 100<br>100 |
| H + 24 | 5 + 0.25<br>1 + 0.5 | 100<br>100 | Q + 24 | 5 + 0.25<br>1 + 0.5 | 100<br>100 |
| I + 24 | 5 + 0.25<br>1 + 0.5 | 100<br>100 | | | |

TABLE 46

| Test Compound No. | Test Concentration (ppm) | Prevention Value (%) | Test Compound No. | Test Concentration (ppm) | Prevention Value (%) |
|---|---|---|---|---|---|
| A + 25 | 5 + 0.25<br>1 + 0.5 | 100<br>100 | J + 25 | 5 + 0.25<br>1 + 0.5 | 100<br>100 |
| B + 25 | 5 + 0.25<br>1 + 0.5 | 100<br>100 | K + 25 | 5 + 0.25<br>1 + 0.5 | 100<br>100 |
| C + 25 | 5 + 0.25<br>1 + 0.5 | 100<br>100 | L + 25 | 5 + 0.25<br>1 + 0.5 | 100<br>100 |
| D + 25 | 5 + 0.25<br>1 + 0.5 | 100<br>100 | M + 25 | 5 + 0.25<br>1 + 0.5 | 100<br>100 |
| E + 25 | 5 + 0.25<br>1 + 0.5 | 100<br>100 | N + 25 | 5 + 0.25<br>1 + 0.5 | 100<br>100 |
| F + 25 | 5 + 0.25<br>1 + 0.5 | 100<br>100 | O + 25 | 5 + 0.25<br>1 + 0.5 | 100<br>100 |
| G + 25 | 5 + 0.25<br>1 + 0.5 | 100<br>100 | P + 25 | 5 + 0.25<br>1 + 0.5 | 100<br>100 |
| H + 25 | 5 + 0.25<br>1 + 0.5 | 100<br>100 | Q + 25 | 5 + 0.25<br>1 + 0.5 | 100<br>100 |
| I + 25 | 5 + 0.25<br>1 + 0.5 | 100<br>100 | | | |

TABLE 47

| Test Compound No. | Test Concentration (ppm) | Prevention Value (%) | Test Compound No. | Test Concentration (ppm) | Prevention Value (%) |
|---|---|---|---|---|---|
| A + 26 | 5 + 0.2<br>1 + 1 | 100<br>100 | J + 26 | 5 + 0.2<br>1 + 1 | 100<br>100 |
| B + 26 | 5 + 0.2<br>1 + 1 | 100<br>100 | K + 26 | 5 + 0.2<br>1 + 1 | 100<br>100 |
| C + 26 | 5 + 0.2<br>1 + 1 | 100<br>100 | L + 26 | 5 + 0.2<br>1 + 1 | 100<br>100 |
| D + 26 | 5 + 0.2<br>1 + 1 | 100<br>100 | M + 26 | 5 + 0.2<br>1 + 1 | 100<br>100 |
| E + 26 | 5 + 0.2<br>1 + 1 | 100<br>100 | N + 26 | 5 + 0.2<br>1 + 1 | 100<br>100 |
| F + 26 | 5 + 0.2<br>1 + 1 | 100<br>100 | O + 26 | 5 + 0.2<br>1 + 1 | 100<br>100 |
| G + 26 | 5 + 0.2<br>1 + 1 | 100<br>100 | P + 26 | 5 + 0.2<br>1 + 1 | 100<br>100 |
| H + 26 | 5 + 0.2<br>1 + 1 | 100<br>100 | Q + 26 | 5 + 0.2<br>1 + 1 | 100<br>100 |
| I + 26 | 5 + 0.2<br>1 + 1 | 100<br>100 | | | |

TABLE 48

| Test Compound No. | Test Concentration (ppm) | Prevention Value (%) | Test Compound No. | Test Concentration (ppm) | Prevention Value (%) |
|---|---|---|---|---|---|
| A + 28 | 5 + 0.25<br>1 + 0.5 | 100<br>100 | J + 28 | 5 + 0.25<br>1 + 0.5 | 100<br>100 |
| B + 28 | 5 + 0.25<br>1 + 0.5 | 100<br>100 | K + 28 | 5 + 0.25<br>1 + 0.5 | 100<br>100 |
| C + 28 | 5 + 0.25<br>1 + 0.5 | 100<br>100 | L + 28 | 5 + 0.25<br>1 + 0.5 | 100<br>100 |
| D + 28 | 5 + 0.25<br>1 + 0.5 | 100<br>100 | M + 28 | 5 + 0.25<br>1 + 0.5 | 100<br>100 |
| E + 28 | 5 + 0.25<br>1 + 0.5 | 100<br>100 | N + 28 | 5 + 0.25<br>1 + 0.5 | 100<br>100 |
| F + 28 | 5 + 0.25<br>1 + 0.5 | 100<br>100 | O + 28 | 5 + 0.25<br>1 + 0.5 | 100<br>100 |
| G + 28 | 5 + 0.25<br>1 + 0.5 | 100<br>100 | P + 28 | 5 + 0.25<br>1 + 0.5 | 100<br>100 |
| H + 28 | 5 + 0.25<br>1 + 0.5 | 100<br>100 | Q + 28 | 5 + 0.25<br>1 + 0.5 | 100<br>100 |
| I + 28 | 5 + 0.25<br>1 + 0.5 | 100<br>100 | | | |

TABLE 49

| Test Compound No. | Test Concentration (ppm) | Prevention Value (%) | Test Compound No. | Test Concentration (ppm) | Prevention Value (%) |
|---|---|---|---|---|---|
| A + 29 | 5 + 0.25<br>1 + 0.5 | 100<br>100 | J + 29 | 5 + 0.25<br>1 + 0.5 | 100<br>100 |
| B + 29 | 5 + 0.25<br>1 + 0.5 | 100<br>100 | K + 29 | 5 + 0.25<br>1 + 0.5 | 100<br>100 |
| C + 29 | 5 + 0.25<br>1 + 0.5 | 100<br>100 | L + 29 | 5 + 0.25<br>1 + 0.5 | 100<br>100 |
| D + 29 | 5 + 0.25<br>1 + 0.5 | 100<br>100 | M + 29 | 5 + 0.25<br>1 + 0.5 | 100<br>100 |
| E + 29 | 5 + 0.25<br>1 + 0.5 | 100<br>100 | N + 29 | 5 + 0.25<br>1 + 0.5 | 100<br>100 |
| F + 29 | 5 + 0.25<br>1 + 0.5 | 100<br>100 | O + 29 | 5 + 0.25<br>1 + 0.5 | 100<br>100 |
| G + 29 | 5 + 0.25<br>1 + 0.5 | 100<br>100 | P + 29 | 5 + 0.25<br>1 + 0.5 | 100<br>100 |
| H + 29 | 5 + 0.25<br>1 + 0.5 | 100<br>100 | Q + 29 | 5 + 0.25<br>1 + 0.5 | 100<br>100 |
| I + 29 | 5 + 0.25<br>1 + 0.5 | 100<br>100 | | | |

TABLE 50

| Test Compound No. | Test Concentration (ppm) | Prevention Value (%) | Test Compound No. | Test Concentration (ppm) | Prevention Value (%) |
|---|---|---|---|---|---|
| A + 31 | 5 + 0.2<br>1 + 1 | 100<br>100 | J + 31 | 5 + 0.2<br>1 + 1 | 100<br>100 |
| B + 31 | 5 + 0.2<br>1 + 1 | 100<br>100 | K + 31 | 5 + 0.2<br>1 + 1 | 100<br>100 |
| C + 31 | 5 + 0.2<br>1 + 1 | 100<br>100 | L + 31 | 5 + 0.2<br>1 + 1 | 100<br>100 |
| D + 31 | 5 + 0.2<br>1 + 1 | 100<br>100 | M + 31 | 5 + 0.2<br>1 + 1 | 100<br>100 |
| E + 31 | 5 + 0.2<br>1 + 1 | 100<br>100 | N + 31 | 5 + 0.2<br>1 + 1 | 100<br>100 |
| F + 31 | 5 + 0.2<br>1 + 1 | 100<br>100 | O + 31 | 5 + 0.2<br>1 + 1 | 100<br>100 |
| G + 31 | 5 + 0.2<br>1 + 1 | 100<br>100 | P + 31 | 5 + 0.2<br>1 + 1 | 100<br>100 |
| H + 31 | 5 + 0.2<br>1 + 1 | 100<br>100 | Q + 31 | 5 + 0.2<br>1 + 1 | 100<br>100 |
| I + 31 | 5 + 0.2<br>1 + 1 | 100<br>100 | | | |

TABLE 51

| Test Compound No. | Test Concentration (ppm) | Prevention Value (%) | Test Compound No. | Test Concentration (ppm) | Prevention Value (%) |
|---|---|---|---|---|---|
| A + 32 | 5 + 2<br>1 + 10 | 100<br>100 | J + 32 | 5 + 2<br>1 + 10 | 100<br>100 |
| B + 32 | 5 + 2<br>1 + 10 | 100<br>100 | K + 32 | 5 + 2<br>1 + 10 | 100<br>100 |
| C + 32 | 5 + 2<br>1 + 10 | 100<br>100 | L + 32 | 5 + 2<br>1 + 10 | 100<br>100 |
| D + 32 | 5 + 2<br>1 + 10 | 100<br>100 | M + 32 | 5 + 2<br>1 + 10 | 100<br>100 |
| E + 32 | 5 + 2<br>1 + 10 | 100<br>100 | N + 32 | 5 + 2<br>1 + 10 | 100<br>100 |
| F + 32 | 5 + 2<br>1 + 10 | 100<br>100 | O + 32 | 5 + 2<br>1 + 10 | 100<br>100 |
| G + 32 | 5 + 2<br>1 + 10 | 100<br>100 | P + 32 | 5 + 2<br>1 + 10 | 100<br>100 |
| H + 32 | 5 + 2<br>1 + 10 | 100<br>100 | Q + 32 | 5 + 2<br>1 + 10 | 100<br>100 |
| I + 32 | 5 + 2<br>1 + 10 | 100<br>100 | | | |

TABLE 52

| Test Compound No. | Test Concentration (ppm) | Prevention Value (%) | Test Compound No. | Test Concentration (ppm) | Prevention Value (%) |
|---|---|---|---|---|---|
| A + 34 | 5 + 1<br>1 + 5 | 100<br>100 | J + 34 | 5 + 1<br>1 + 5 | 100<br>100 |
| B + 34 | 5 + 1<br>1 + 5 | 100<br>100 | K + 34 | 5 + 1<br>1 + 5 | 100<br>100 |
| C + 34 | 5 + 1<br>1 + 5 | 100<br>100 | L + 34 | 5 + 1<br>1 + 5 | 100<br>100 |
| D + 34 | 5 + 1<br>1 + 5 | 100<br>100 | M + 34 | 5 + 1<br>1 + 5 | 100<br>100 |
| E + 34 | 5 + 1<br>1 + 5 | 100<br>100 | N + 34 | 5 + 1<br>1 + 5 | 100<br>100 |
| F + 34 | 5 + 1<br>1 + 5 | 100<br>100 | O + 34 | 5 + 1<br>1 + 5 | 100<br>100 |
| G + 34 | 5 + 1<br>1 + 5 | 100<br>100 | P + 34 | 5 + 1<br>1 + 5 | 100<br>100 |
| H + 34 | 5 + 1<br>1 + 5 | 100<br>100 | Q + 34 | 5 + 1<br>1 + 5 | 100<br>100 |
| I + 34 | 5 + 1<br>1 + 5 | 100<br>100 | | | |

TABLE 53

| Test Compound No. | Test Concentration (ppm) | Prevention Value (%) | Test Compound No. | Test Concentration (ppm) | Prevention Value (%) |
|---|---|---|---|---|---|
| A + 35 | 5 + 1<br>1 + 5 | 100<br>100 | J + 35 | 5 + 1<br>1 + 5 | 100<br>100 |
| B + 35 | 5 + 1<br>1 + 5 | 100<br>100 | K + 35 | 5 + 1<br>1 + 5 | 100<br>100 |
| C + 35 | 5 + 1<br>1 + 5 | 100<br>100 | L + 35 | 5 + 1<br>1 + 5 | 100<br>100 |
| D + 35 | 5 + 1<br>1 + 5 | 100<br>100 | M + 35 | 5 + 1<br>1 + 5 | 100<br>100 |
| E + 35 | 5 + 1<br>1 + 5 | 100<br>100 | N + 35 | 5 + 1<br>1 + 5 | 100<br>100 |
| F + 35 | 5 + 1<br>1 + 5 | 100<br>100 | O + 35 | 5 + 1<br>1 + 5 | 100<br>100 |
| G + 35 | 5 + 1<br>1 + 5 | 100<br>100 | P + 35 | 5 + 1<br>1 + 5 | 100<br>100 |
| H + 35 | 5 + 1<br>1 + 5 | 100<br>100 | Q + 35 | 5 + 1<br>1 + 5 | 100<br>100 |
| I + 35 | 5 + 1<br>1 + 5 | 100<br>100 | | | |

TABLE 54

| Test Compound No. | Test Concentration (ppm) | Prevention Value (%) | Test Compound No. | Test Concentration (ppm) | Prevention Value (%) |
|---|---|---|---|---|---|
| A + 37 | 1 + 0.1 | 100 | J + 37 | 1 + 0.1 | 100 |
| B + 37 | 1 + 0.1 | 100 | K + 37 | 1 + 0.1 | 100 |
| C + 37 | 1 + 0.1 | 100 | L + 37 | 1 + 0.1 | 100 |
| D + 37 | 1 + 0.1 | 100 | M + 37 | 1 + 0.1 | 100 |
| E + 37 | 1 + 0.1 | 100 | N + 37 | 1 + 0.1 | 100 |
| F + 37 | 1 + 0.1 | 100 | O + 37 | 1 + 0.1 | 100 |
| G + 37 | 1 + 0.1 | 100 | P + 37 | 1 + 0.1 | 100 |
| H + 37 | 1 + 0.1 | 100 | Q + 37 | 1 + 0.1 | 100 |
| I + 37 | 1 + 0.1 | 100 | | | |

TABLE 55

| Test Compound No. | Test Concentration (ppm) | Prevention Value (%) | Test Compound No. | Test Concentration (ppm) | Prevention Value (%) |
|---|---|---|---|---|---|
| A+38 | 1+0.1 | 100 | J+38 | 1+0.1 | 100 |
| B+38 | 1+0.1 | 100 | K+38 | 1+0.1 | 100 |
| C+38 | 1+0.1 | 100 | L+38 | 1+0.1 | 100 |
| D+38 | 1+0.1 | 100 | M+38 | 1+0.1 | 100 |
| E+38 | 1+0.1 | 100 | N+38 | 1+0.1 | 100 |
| F+38 | 1+0.1 | 100 | O+38 | 1+0.1 | 100 |
| G+38 | 1+0.1 | 100 | P+38 | 1+0.1 | 100 |
| H+38 | 1+0.1 | 100 | Q+38 | 1+0.1 | 100 |
| I+38 | 1+0.1 | 100 | | | |

The agricultural and horticultural fungicidal composition according to the present invention comprising two kinds of the specific fungicidal compounds in combination exhibits a markedly improved effects as compared with the effects obtained in the individual use of the compounds, thus it is possible to reduce the necessary dose. The fungicidal composition exhibits both preventive and curing effects on plant diseases and is therefore suitable as an agricultural and horticultural fungicide.

While the invention has been described in detail and with reference to specific examples thereof, it will be apparent to one skilled in the art that various changes and modifications can be made therein without departing from the spirit and scope thereof.

## Claims

1. An agricultural and horticultural fungicidal composition comprising a benzothiazole derivative represented by formula (I):

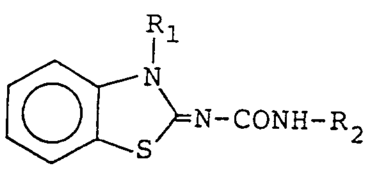

(I)

wherein $R_1$ represents a lower alkyl group, an alkenyl group, an alkynyl group, a cycloalkyl group, an alkoxyalkyl group, a benzyl group, an alkyl group containing a carbonyl group or an alkoxyalkyl group containing a carbonyl group; and $R_2$ represents a lower alkyl group, an alkoxy group or an alkyl group having from 1 to 3 carbon atoms and containing from 1 to 6 fluorine atoms, and
a compound having a fungicidal activity.

2. The agricultural and horticultural fungicidal composition of claim 1, wherein said compound having a fungicidal activity is selected from azole compounds, pyrimidine compounds, piperazine compounds, piperidine compounds, pyridine compounds, morpholine compounds, organophosphorus compounds, quinoxaline compounds, benzimidazole compounds, acrylic acid compounds and sulfur.

3. The agricultural and horticultural fungicidal composition of claim 1, wherein said benzothiazole derivative and said compound having a fungicidal activity are present in a weight ratio of from 1:100 to 100:1.

4. The agricultural and horticultural fungicidal composition of claim 1, wherein said benzothiazole derivative and said compound having a fungicidal activity are present in a weight ratio of from 1:50 to 50:1.

**5.** A method of treatment of fungal diseases in plants characterized by the administration of a composition as defined in any one of claims 1 to 4.

European Patent Office

# EUROPEAN SEARCH REPORT

Application Number
EP 94 10 2060

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | EP-A-0 407 621 (HODOGAYA CHEMICAL)<br>* page 1, paragraph 3 - page 2, paragraph 1 *<br>* page 11, paragraph 2 *<br>--- | 1,3-5 | A01N47/36<br>//(A01N47/36,<br>59:02,57:16,<br>55:00,47:34,<br>47:18,43:84,<br>43:653,43:60,<br>43:54,43:50,<br>43:40,43:38,<br>37:50) |
| D,P,X | EP-A-0 568 096 (HODOGAYA CHEMICAL)<br>* page 2, line 30 - line 52 *<br>* page 5, line 1 - line 2 *<br>--- | 1,3-5 | |
| A | EP-A-0 180 313 (IMPERIAL CHEMICAL INDUSTRIES)<br>* page 1, line 1 - line 3 *<br>* page 4, line 25 *<br>--- | 1-5 | |
| A | EP-A-0 345 955 (IMPERIAL CHEMICAL INDUSTRIES)<br>* page 2, line 21 - line 24 *<br>* page 3, line 39 *<br>* page 4, line 2 *<br>--- | 1-5 | TECHNICAL FIELDS SEARCHED (Int.Cl.6) |
| A | EP-A-0 390 394 (IMPERIAL CHEMICAL INDUSTRIES)<br>* page 2, line 40 - line 45 *<br>* page 4, line 29 *<br>* page 4, line 37 *<br>--- | 1-5 | A01N |
| A | FR-A-2 299 808 (AIRWICK)<br>* page 6, line 6 - line 10 *<br>----- | 1-5 | |

The present search report has been drawn up for all claims

| Place of search | Date of completion of the search | Examiner |
|---|---|---|
| THE HAGUE | 15 September 1994 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document